# FASCICULE DE BREVET EUROPEEN

(11) **EP 2 098 580 B1**
(45) Date de publication et mention de la délivrance du brevet: **04.01.2012**
(21) Numéro de dépôt: 09153907.2
(22) Date de dépôt: 27.02.2009
(51) Int. Cl.: C09J 177/00, C09J 177/06, C09J 177/02, B32B 27/34, B32B 27/08, B32B 1/08, F16L 11/04, C09K 5/00, C08L 51/06, C08L 77/00, C08L 77/02, C08L 77/06

(54) **Composition adhésive et structure comprenant au moins une couche de ladite composition.**
Klebezusammensetzung und Struktur, die mindestens eine Schicht von dieser Zusammensetzung enthält
Adhesive composition and structure comprising at least one layer of said composition.

(30) Priorité: 03.03.2008 FR 0851379
(43) Date de publication de la demande: 09.09.2009
(73) Titulaire: ARKEMA FRANCE, 92700 Colombes (FR)
(72) Inventeur: Ferreiro, Vincent, 27180, SAINT-SEBASTIEN DE MORSENT (FR); Montanari, THibaut, 27300, MENNEVAL (FR); Montezin, Fabrice, 27230, SAINT AUBIN DE SCELLON (FR)
(74) Mandataire: Dossmann, Gérard

(56) Documents cités:
- EP-A- 1 162 061

## Description

L'invention porte sur à une composition adhésive, également appelée liant, son utilisation pour la réalisation de structures destinées au transfert ou au stockage de fluides, tels que les carburants ou bio-carburants.

L'invention porte plus particulièrement sur les tubes présents au sein d'un moteur. Ces tubes peuvent par exemple être destinés au transport de carburants, notamment du réservoir jusqu'au moteur, au circuit de refroidissement, au système hydraulique, ou encore destinés au circuit d'air conditionné ou au transport de mélange d'urée et d'eau. Ces tubes peuvent également entrer dans des applications sous-châssis.

Pour des raisons de sécurité et de préservation de l'environnement, notamment avec l'arrivée de nouveaux bio-carburants, les constructeurs automobiles imposent aux tubes précédemment cités des caractéristiques mécaniques particulières, ainsi que des caractéristiques de très faible perméabilité et de bonne tenue aux différents constituants des carburants, ceux-ci variant selon le pays (hydrocarbures, additifs, alcools comme le méthanol et l'éthanol, les alcools pouvant être des composants majoritaires dans certains cas), de bonne tenue aux huiles de lubrification du moteur et aux autres produits chimiques susceptibles d'être rencontrés dans cet environnement (acide de batteries, liquides de frein, liquides de refroidissement, sels métalliques tels que le chlorure de calcium ou de zinc).

Les caractéristiques des cahiers des charges couramment requises par les constructeurs automobiles pour qu'un tube (ou qu'un matériau pour la fabrication d'un tube par exemple ) soit jugé satisfaisant sont cumulativement les suivantes :
- bonne et pérenne adhésion entre les couches, si le tube est un tube multicouche, tout particulièrement après avoir été exposé au carburant ;
- bonne intégrité des liaisons (tubes+raccords) après circulation du carburant, c'est-à-dire ne conduisant à aucune fuite ;
- bonne stabilité dimensionnelle du tube, lorsqu'il est utilisé avec de l'essence ;
- bonne tenue aux chocs à froid (de -30°C à -40°C environ), de manière à ce que le tube ne se brise pas ;
- bonne tenue à chaud (environ 150°C), de manière à ce que le tube ne se déforme pas ;
- bonne tenue au vieillissement en milieu oxydatif chaud (par exemple : air chaud du compartiment moteur, de 100 à 150°C environ) ;
- bonne tenue aux carburants et à leurs produits de dégradation et notamment avec de fortes teneurs en peroxyde ;
- très faible perméabilité aux carburants, et plus particulièrement de bonnes propriétés barrière aux bio-carburants, tant pour ses composants polaires (comme l'éthanol) que pour ses composants apolaires (hydrocarbures) ;
- bonne souplesse du tube pour faciliter le montage notamment de la tubulure d'alimentation en carburant ;
- bonne résistance au Zinc12 (par exemple, en hiver, lorsque les routes sont salées, l'extérieur du tube étant exposé à cet environnement).

De plus, les tubes (matériaux) recherchés doivent éviter les inconvénients suivants :
- si le tube est un tube multicouche, le délaminage des couches, notamment internes, notamment lors de l'insertion de raccord (ce qui peut conduire à des fuites) ;
- un gonflement excessif du tube après vieillissement dans les systèmes essence/diesel (y compris pour les biodiesels ou bio essences), qui peut conduirent à des fuites ou des problèmes de positionnement sous le véhicule.

A l'heure actuelle, il existe deux types de tubes, des tubes monocouches et multicouches, c'est-à-dire constitués d'une ou plusieurs couches de polymère.

De manière classique, les tubes utilisés sont fabriqués par mono-extrusion, s'il s'agit d'un tube monocouche, ou par co-extrusion des différentes couches, s'il s'agit d'un tube multicouche, selon les techniques habituelles de transformation des thermoplastiques.

Pour assurer une bonne stabilité dimensionnelle d'un tube multicouche, il est essentiel d'avoir une excellente adhésion entre les différentes couches de polymères formant le tube. De manière très classique, on interpose une couche adhésive entre deux couches polymères qui, de par leur composition, n'adhèrent pas ou pas suffisamment entre elles, pour répondre aux cahiers des charges mentionnés précédemment.

D'une manière plus générale, le problème à résoudre est d'associer des matériaux polyamides fortement carbonés, c'est-à-dire dont le nombre moyen d'atomes de carbone (C) par rapport à l'atome d'azote (N) est supérieur ou égal à 9, qui sont des matériaux très souples et très endurants (en particulier en choc à froid, en vieillissement dans l'air chaud, en résistance au chlorure de zinc), qui constitueront généralement la partie externe du tube, associé à des matériaux barrières, c'est-à-dire des matériaux peu perméables aux liquides, qui constitueront la face interne du tube et seront parfois en contact direct avec les liquides, tel que l'essence ou autres fluides précédemment cités.

Ces matériaux barrières peuvent être des polyamides faiblement carbonés, c'est-à-dire dont le nombre moyen d'atomes de carbone (C) par rapport à l'atome d'azote (N) est inférieur à 9, de préférence semicristallins et de haut point du fusion, mais aussi des matériaux barrières non polyamides tels que le copolymère d'éthylène et d'alcool vinylique (noté EVOH ci-après), voire même des matériaux fluorés fonctionnalisés tels que le polyfluorure de vinylidène (PVDF) fonctionnalisé, le copolymère d'éthylène et de tétrafluoroéthylène (ETFE) fonctionnalisé, le copolymère d'éthylène, de tétrafluoroéthylène et d'hexafluoro-propylène (EFEP) fonctionnalisé, le polysulfure de phénylène (PPS) fonctionnalisé, le polynaphtalate de butylène (PBN) fonctionnalisé.

Selon la présente demande, le terme "polyamide", également noté PA, vise :
- les homopolymères,
- les copolymères, ou copolyamides, à base de différents motifs amide, tel par exemple le copolyamide 6/12 avec des motifs amide dérivés du lactame-6 et du lactame-12,
- les alliages de polyamides, dès lors que le polyamide est le constituant majoritaire.

Il existe aussi une catégorie de copolyamides au sens large, qui bien que non préférée, fait partie du cadre de l'invention. Il s'agit des copolyamides comprenant non seulement des motifs amides (qui seront majoritaires, d'où le fait qu'ils soient à considérer comme des copolyamides au sens large), mais aussi des motifs de nature non amide, par exemple des motifs éthers. Les exemples les plus connus sont les PEBA ou polyéther-bloc-amide, et leurs variantes copolyamide-ester-éther, copolyamide-éther, copolyamide ester. Parmi ceux-ci, citons le PEBA-12 où les motifs polyamide sont les mêmes que ceux du PA12, le PEBA-6.12 où les motifs polyamide sont les mêmes que ceux du PA6.12.

On distingue également les homopolyamides, copolyamides et et alliages par leur nombre d'atomes de carbone par atome d'azote, sachant qu'il y a autant d'atomes d'azote que de groupes amides (-CO-NH-).

Un polyamide fortement carboné est un polyamide à fort taux d'atomes de carbone (C) par rapport à l'atome d'azote (N). Ce sont les polyamides avec environ au moins 9 atomes de carbone par atome d'azote, tel par exemple le polyamide-9, le polyamide-12, le polyamide-11, le polyamide-10.10 (PA10.10), le copolyamide 12/10.T, le copolyamide 11/10.T, le polyamide-12.T, le polyamide-6.12 (PA6.12). T représente l'acide téréphtalique.

La nomenclature utilisée pour définir les polyamides est décrite dans la norme ISO 1874-1:1992 "Plastiques -- Matériaux polyamides (PA) pour moulage et extrusion -- Partie 1: Désignation", notamment en page 3 (tableaux 1 et 2) et est bien connue de l'homme du métier.

Un polyamide faiblement carboné est un polyamide à faible taux d'atomes de carbone (C) par rapport à l'atome d'azote (N). Ce sont les polyamides avec environ moins de 9 atomes de carbone par atome d'azote, tel par exemple le polyamide-6, le polyamide-6.6, le polyamide-4.6, le copolyamide-6.T/6.6, le copolyamide 6.I/6.6, le copolyamide 6.T/6.I/6.6, le polyamide 9.T. I représente le diacide isophtalique.

Dans le cas d'un homopolyamide de type PA-X.Y, avec X désignant un motif obtenu à partir d'une diamine et Y désignant un motif obtenu à partir d'un diacide, le nombre d'atomes de carbone par atome d'azote est la moyenne des nombres d'atomes de carbone présents dans le motif issu de la diamine X et dans le motif issu du diacide Y. Ainsi le PA6.12 est un PA à 9 atomes de carbone par atome d'azote, autrement dit un PA en C9. Le PA6.13 est en C9.5. Le PA-12.T est en C10, le T, c'est-à-dire l'acide téréphtalique, étant en C8.

Dans le cas des copolyamides, le nombre d'atomes de carbone par atome d'azote se calcule selon le même principe. Le calcul est réalisé au prorata molaire des différents motifs amides. Ainsi le coPA-6.T/6.6 60/40 en mol% est en C6,6 : 60%×(6+8)/2+40%×(6+6)/2 = 6,6. Dans le cas d'un copolyamide ayant des motifs de type non amide, le calcul s'effectue uniquement sur la part de motifs amides. Ainsi, par exemple, le PEBA-12, qui est un copolymère bloc de motifs amide 12 et de motifs éther, le nombre moyen d'atome de carbone par atome d'azote sera 12, comme pour le PA12 ; pour le PEBA-6.12, il sera de 9, comme pour le PA6.12.

Ainsi, des polyamides fortement carbonés comme le polyamide PA12 ou 11 adhèrent difficilement sur un polymère EVOH, sur un polyamide faiblement carboné comme le polyamide PA6, ou encore sur un alliage de polyamide PA6 et de polyoléfine (comme, par exemple, un Orgalloy^{®} commercialisé par la société Arkema).

Toutefois, on observe que les structures de tubes actuellement proposées ne sont pas satisfaisantes pour une utilisation dédiée aux bio-carburants, les exigences des cahiers des charges des constructeurs automobiles rappelées ci-avant ne pouvant être toutes simultanément remplies.

Les bio-carburants ne sont pas uniquement issus du pétrole mais comprennent une proportion de produits polaires tels les alcools d'origine végétale, comme l'éthanol ou le méthanol, d'au moins 3%. Ce taux peut monter jusqu'à 85%, voire 95%.

En outre, la température de circulation du carburant tend à s'élever du fait des nouveaux moteurs (plus confinés, opérant à plus haute température).

Des liants à base de copolyamides sont connus. Le document EP 1 162 061 (EMS-CHEMIE AG) décrit comme adhésif ou liant, des matériaux à base d'un ou plusieurs copolyamides, ces copolyamides étant constitués de motifs faiblement carbonés et de motifs fortement carbonés. Par exemple, le copolyamide 6/12 avec des proportions assez semblables de motifs 6 et de motifs 12 est mis en oeuvre pour faire adhérer du PA12 sur du PA6, du PA12 sur de l'EVOH, du PA11 sur du PA6 ou encore du PA11 sur de l'EVOH.

Toutefois, il a été constaté qu'une telle composition adhésive à base de copolyamide(s) verra son adhésion chuter fortement dans de l'éthanol chaud ou au contact prolongé dans des mélanges polaire/apolaire tel la bio-essence (éthanol/essence à base d'hydrocarbures apolaires) chaude.

Tous ces liants, assez peu cristallins, présentent l'inconvénient de tendre à se dissoudre et donc à perdre leur intégrité et leur cohésion mécanique dans ces fluides chauds. L'adhésion n'est, de ce fait, plus assurée. Le problème est d'autant plus critique que le taux d'alcool dans l'essence augmente et que la température augmente.

Des compositions adhésives non plus à base de copolyamides, peu à pas cristallins, mais à base de mélanges de polyamides plus cristallins, en alliant au moyen d'un agent compatibilisant un polyamide fortement carboné tel le PA12 à un polyamide faiblement carboné fortement cristallin et/ou barrière tel le PA6 (par exemple dans EP1452307 et US6,555,243 de la société EMS-CHEMIE, dans US2004/0058111 de la société Saint-Gobain) conduisent à des niveaux d'adhésion initiale faibles et insuffisants.

Des essais ont été réalisés à partir de mélanges de polyamides cristallins. Ainsi, il a été réalisé une composition adhésive comprenant 40% de PA6, 40% PA12 et 20% de compatibilisant type EPR fonctionnalisé (Exxelor VA1801). Cette composition est certes plus résistante à l'effet de dissolution du biocarburant chaud, mais l'adhésion demeure à un niveau faible ou moyen et insuffisant par rapport aux résultats souhaités. Les conséquences de cette mauvaise adhésion sont un gonflement excessif résultant de la désolidarisation des couches, ainsi qu'une perméabilité aux carburants devenue très forte après immersion ou circulation des carburants à l'intérieur du tube, l'étanchéité n'étant plus maintenue entre les couches, et pouvant conduire à des fuites au raccord.

Partant de ce constat, il devient donc nécessaire de rechercher une composition adhésive capable d'offrir une adhésion suffisante et pérenne et permettant d'obtenir des tubes multicouches répondant aux cahiers des charges des constructeurs automobiles, en particulier lors de l'utilisation des bio-carburants.

La présente invention vise donc à remédier aux inconvénients relevés ci-dessus et à proposer une composition adhésive qui soit performante en terme d'adhésion pour permettre son utilisation dans des structures multicouches de tubes destinés au transfert et au stockage de fluides, notamment des carburants, que ceux-ci soient des carburants conventionnels ou des bio-carburants et ce, même pour des températures de circulation de fluides élevées, ces températures de circulation pouvant aller de 40 à 150°C en fonction de la composition du carburant : entre 60 et 90°C pour des essences très alcoolisées (par exemple pour le "E85", essence à 85% d'éthanol, essence de référence au Brésil et en Suède) et entre 120 et 150°C pour les essences peu ou pas alcoolisées (essence sans plomb, par exemple).

En outre, la composition adhésive selon l'invention doit pouvoir être mise en oeuvre quelles que soient les couches adjacentes formant la structure des tubes considérés, et pas uniquement avec des couches adjacentes à base de polyamide ou d'EVOH, comme dans le document US 2004/0265527.

La présente invention vise également à fournir des structures multicouches mettant en oeuvre une composition adhésive remédiant aux inconvénients cités ci-dessus.

La demanderesse a résolu le problème en observant que la combinaison de, non pas 2, mais au moins 3 polyamides semicristallins, ceux-ci étant différents et non-miscibles, de telle sorte qu'il développe un fort pouvoir d'adhésion et que ce pouvoir perdure même après un contact prolongé dans des fluides froids ou chauds, ces fluides pouvant être de nature polaire, apolaire et surtout mixte, tel les bio-carburants.

Selon l'invention, la composition adhésive comprend :
- au moins un polyamide noté A présentant un nombre moyen d'atomes de carbone par atome d'azote noté C_{A} compris entre 4 et 8,5, avantageusement entre 4 et 7 ;
- au moins un polyamide noté B présentant une température de fusion supérieure ou égale à 180°C et un nombre moyen d'atomes de carbone par atome d'azote noté C_{B} compris entre 7 et 10, avantageusement entre 7,5 et 9,5 ;
- au moins un polyamide noté C présentant un nombre moyen d'atomes de carbone par atome d'azote noté C_{C} compris entre 9 et 18, avantageusement entre 10 et 18 ;
- au moins 50% en poids de ladite composition étant formés d'un ou de plusieurs polyamides choisis parmi les polyamides A, B et C,
- la moyenne pondérée massique des enthalpies de fusion de ces polyamides au sein de ladite composition étant supérieure à 25J/g (DSC),
- le nombre moyen d'atomes de carbone par atome d'azote des polyamides A, B et C répondant en outre à l'inéquation stricte suivante : C_{A} < C_{B} < C_{C}.

L'expression "au moins un polyamide A " couvre bien évidemment un mélange comprenant deux, ou plus, des polyamides A tels que définis ci-dessus.

Il est précisé que l'expression "compris entre" utilisée dans les paragraphes précédents, mais également dans la suite de la présente description, doit s'entendre comme incluant chacune des bornes mentionnées.

De préférence, lorsque le ou les polyamides A, B et C sont des copolyamides, alors ils peuvent être un copolymère statique (ou aléatoire) ou alterné (ou régulier).

Cette composition adhésive présente l'avantage d'être universelle, c'est-à-dire d'adhérer sur les couches polymères habituellement utilisées dans la conception des tubes définis ci-dessus, à savoir, les compositions à base de polyamides fortement carbonés, tels le PA11, le PA12, d'une part et d'autre part, les compositions à base de polyamides faiblement carbonés tels le PA6, le PA6.6, les compositions à base d'EVOH ou encore les alliages de polyamides faiblement carbonés et de polyoléfines.

De plus, il a été constaté qu'après contact avec des essences alcoolisées, telle que l'essence dénommée E50 comprenant en masse 50% d'éthanol et 50% d'essence additivée (l'essence pouvant par exemple être de type L additivée par 5% d'eau et 1% de méthanol, selon la norme du constructeur Peugeot SA B31 5220, ou être par exemple du type "Fuel C", ce dernier étant un mélange d'iso-octane et de toluène à parts égales), l'adhésion reste supérieure aux recommandations des constructeurs automobiles.

Les différences entre les nombres moyens d'atomes de carbone par atome d'azote (C_{B}-C_{A}) et (C_{C}-C_{B}) peuvent être comprises entre 1 et 4, et de préférence entre 2 et 3.

La composition adhésive peut comprendre :
- de 8 à 33% en poids de polyamide A par rapport au poids total des polyamides présents au sein de ladite composition, et de préférence 12 à 25%,
- de 34 à 84% en poids de polyamide B par rapport au poids total des polyamides présents au sein de ladite composition, et de préférence 50 à 76%,
- de 8 à 33% en poids de polyamide C par rapport par rapport au poids total des polyamides présents au sein de ladite composition, et de préférence 12 à 25%.

Le polyamide A possède un rapport entre le nombre d'atomes de carbone sur le nombre d'atomes d'azote noté C_{A} compris entre 4 et 8,5 (bornes incluses), préférentiellement entre 4 et 7. Comme indiqué précédemment, les PA6, PA6.6, PA4.6, PA6.T/6.6, PA6.T/6.I/6.6 en sont les exemples les plus typiques. De préférence, le polyamide A est choisi parmi les polyamides les plus barrières aux essences et aux bio-essences, typiquement un PA6, un PA4.6 ou encore un PA6.6, mais le polyamide A peut également être un polyamide fortement cristallin comprenant des motifs aromatiques.

De préférence, le polyamide A a une enthalpie de fusion supérieure à 25 J/g (mesurée par DSC).

Les enthalpies de fusion des polyamides présents dans la composition selon l'invention sont mesurées conformément à la norme ISO 11357. Ainsi, le polyamide est soumis à une première chauffe de 20°C/min jusqu'à une température de 280°C, puis à un refroidissement 20°C/min jusqu'à une température de 20°C, puis à une seconde chauffe de 20°C/min jusqu'à une température de 280°C, l'enthalpie de fusion étant mesurée lors de cette seconde chauffe.

Le polyamide A est choisi de préférence parmi les homopolyamides. Si c'est un copolyamide, il doit de préférence contenir peu de copolymère pour être suffisamment cristallin et présenter une enthalpie de fusion supérieure à 25 J/g (mesurée par DSC).

De plus, la température de fusion du polyamide A est de préférence supérieure ou égale à 210°C.

Le polyamide B possède un rapport entre le nombre d'atome de carbone sur le nombre d'atomes d'azote noté C_{B} compris entre 7 et 10 (bornes incluses), préférentiellement entre 7,5 et 9,5.

De préférence, le polyamide B a une enthalpie de fusion supérieure à 25 J/g (mesurée par DSC).

Les PA6.10, PA6.12 et PA-6.14 en sont les exemples les plus typiques. Le polyamide B est de préférence le PA6.10.

Dans le cas où le polyamide B est un copolyamide constitué de deux motifs amides différents, on préfère utiliser dans la composition selon l'invention des copolyamides statistiques (ou aléatoires) et/ou alternés (ou réguliers).

Le polyamide C possède un rapport entre le nombre d'atome de carbone sur le nombre d'atomes d'azote noté C_{C} compris dans la gamme entre 9 et 18 (bornes incluses), préférentiellement entre 10 et 18.

Comme mentionné ci-dessus, les PA12, PA11, PA10.10, PA10.12 et PA6.18 en sont les exemples les plus typiques. On peut également citer le PA12/10T, par exemple celui ayant une proportion molaire de motifs 12 identique à celle de motifs 10.T. Ce type de polyamide est typiquement appelé polyamide fortement carboné.

De préférence, le polyamide C est choisi parmi PA12, PA11, PA10.10, PA10.12 et PA6.18.

De préférence, le polyamide C a une enthalpie de fusion supérieure à 25 J/g (mesurée par DSC).

Le polyamide C est choisi de préférence parmi les homopolyamides. Si c'est un copolyamide, il doit de préférence contenir peu de copolymère pour être suffisamment cristallin et présenter une enthalpie de fusion supérieure à 25 J/g (mesurée par DSC).

La température de fusion du polyamide C est de préférence inférieure à 200°C.

De préférence, chacun des polyamides A, B et C demeure fortement semi-cristallin, c'est-à-dire que chaque polyamide A, B ou C présente une enthalpie de fusion d'au moins 25 J/g. Aussi, dans le cas où le polyamide A, B ou C est un copolyamide, cela signifie que le taux d'un des comonomères est suffisamment élevé, avantageusement supérieur à 80%, préférentiellement supérieur à 90%.

Les polyamides A, B et C sont, de préférence, des polyamides aliphatiques.

La composition selon l'invention présente, de préférence, une force de pelage supérieure à 60 N/cm. Le test d'adhésion dont il est question est réalisé sur un tube de diamètre 8mm et d'épaisseur 1mm. On effectue le pelage d'une des couches en lui faisant subir une traction sous un angle de 90° et à une vitesse de 50mm/min.

Ainsi, avantageusement, la composition adhésive selon l'invention présente une force d'adhérence d'au moins 60N/cm, lorsqu'elle se situe entre une couche de PA 12 et une couche de PA6 ou d'EVOH, et d'au moins 10N/cm, de préférence au moins 20 N/cm après un séjour de 72h à 80°C dans un mélange de bio-essence type E50 (correspondant à un mélange comprenant en masse 50% d'éthanol et 50% d'essence additivée (l'essence pouvant par exemple être de type L additivée par 5% d'eau et 1% de méthanol, selon la norme du constructeur Peugeot SA B31 5220, ou être par exemple du type "Fuel C", ce dernier étant un étant un mélange d'iso-octane et de toluène à parts égales), l'adhésion reste supérieure aux recommandations des constructeurs automobiles.

Ainsi, ce test d'adhésion dans des conditions difficiles (immersion dans une bio-essence pendant une durée longue et à température élevée) est l'un des effets requis pour la résolution du problème technique posé.

De plus, afin d'assurer de bonnes propriétés (flexibilité, tenue à l'éclatement, tenue à la déchirure, transparence, rhéologie, aptitude à la transformation en tube ou en film, nucléation, cristallisation, morphologie d'alliage, compatibilisation, homogénéité, constance, adhésion) et, en particulier, de bonnes propriétés de résistance aux chocs et aux chocs après vieillissement (notamment vieillissement oxydatif à haute température), il est possible d'ajouter à la composition adhésive un compatibilisant modifiant choc de nature élastomère et préférentiellement polaire.

Ainsi, la composition peut comprendre jusqu'à 30% en poids, par rapport au poids total de la composition, d'un modifiant choc constitué par un polymère non rigide présentant un module de flexion inférieur à 100 MPa mesuré selon la norme ISO 178.

Ce polymère non rigide est, de préférence, le plus souple possible et présente une température de transition vitreuse Tg la plus basse possible, c'est-à-dire inférieure à 0°C. Ce modifiant choc est au besoin fonctionnalisé chimiquement de façon à pouvoir réagir avec les polyamides A, B et C et à former un alliage compatible avec eux.

Selon l'invention, le modifiant choc est, de préférence, constitué d'une ou plusieurs polyoléfines, une partie ou la totalité de celles-ci portant une fonction choisie parmi les fonctions acide carboxylique, anhydride carboxylique, époxyde et toute autre fonction susceptible de réagir chimiquement avec les polyamides, typiquement avec ses bouts de chaîne amine (cas de l'acide carboxylique, l'anhydride carboxylique) ou ses bouts de chaînes acides (cas de l'époxyde, en particulier du méthacrylate de glycidyle).

Par exemple, la polyoléfine est choisie parmi :
- un copolymère d'éthylène et de propylène à caractère élastomère (EPR),
- un copolymère éthylène-propylène-diène à caractère élastomère (EPDM) et
- un copolymère éthylène/(méth)acrylate d'alkyle.

Parmi les modifiants choc, citons l'EPR greffé anhydride tel l'Exxelor VA1803 d'Exxon, ou le copolymère de polyéthylène, d'acrylate d'éthyle et d'anhydride maléique (coPE/EA/MAH) tel que le Lotader 4700 de la société Arkema.

La composition adhésive peut également comprendre jusqu'à 50% en poids, par rapport au poids total de la composition, d'un polymère cristallin présentant un module de flexion, mesuré selon la norme ISO 178, supérieur à 300 MPa, avantageusement à 800 MPa.

Ce polymère cristallin est de préférence une polyoléfine rigide semi-cristalline, ou un mélange de polyoléfines rigides semicristallines, portant, en sa totalité ou partiellement, une fonction choisie parmi les fonctions acide carboxylique, anhydride carboxylique et époxyde.

De préférence, la polyoléfine, ou le mélange de polyoléfines, est choisie parmi les polyéthylènes de haute densité, les polypropylènes homopolymères ou faiblement copolymérisés.

Lorsqu'il s'agit d'une polyoléfine de taux de cristallinité élevé, elle peut être par exemple un polyéthylène de haute densité noté hdPE, un polyéthylène haute densité fonctionnalisé note hdPEf par un groupe réactif pouvant réagir avec un des bout de chaînes (ou autres fonctions réactives) du polyamide, typiquement cette fonction est une fonction anhydride, ou un polypropylène (PP) de forte densité, typiquement un PP rigide, linéaire, de type homopolymère ou très légèrement copolymérisé.

La composition peut également comprendre jusqu'à 20% en poids, par rapport au poids total de la composition, d'un plastifiant.

La composition peut également comprendre jusqu'à 50% en poids, par rapport au poids total de la composition, d'un additif choisi parmi les charges antistatiques, les nucléants, les lubrifiants, les colorants, les pigments, les azurants, les anti-oxydants et les stabilisants.

Les stabilisants usuels utilisés avec des polymères sont des phénols, des phosphites, des absorbeurs UV, des stabilisants du type HALS (Hindered Amine Light Stabiliser), des iodures métalliques. On peut citer l'Irganox 1010, 245, 1098, l'Irgafos 168, le Tinuvin 312, l'Iodide P201 de la société Ciba.

L'invention porte sur l'utilisation de la composition adhésive telle que définie ci-dessus pour la réalisation de structures destinées au transfert et au stockage de fluides, en particulier d'un fluide choisi parmi une huile, un liquide de frein, un liquide de refroidissement, une solution d'urée, un hydrocarbure, un diesel, une essence, en particulier une essence comprenant une forte proportion d'alcools tels que l'éthanol.

L'invention porte également sur des structures multicouches.

Plus particulièrement, l'invention porte sur une structure comprenant au moins deux couches, l'une des deux couches, dite couche adhésive ou liant notée (I), étant formée d'une composition adhésive telle que définie ci-dessus.

Selon un premier mode de réalisation de l'invention, la seconde couche est un couche dite couche barrière (II).

Selon une première variante avantageuse de l'invention, la couche barrière (II) peut être formée par une composition comprenant des polymères barrières aux bio-carburants, de préférence choisis parmi l'EVOH, le polyamide A et leur mélange.

On se référera à la description précédemment donnée du polyamide A, qui est un polyamide faiblement carboné.

Ainsi, au sein d'une structure bicouche ou d'une structure multicouche, la seconde couche peut comprendre un matériau barrière, qui peut être choisi parmi :
- soit une composition comprenant un copolymère d'éthylène et de vinylalcool (EVOH),
- soit de polyamides faiblement carbonés, par exemple de polyamides faiblement carbonés amorphes de haute Tg (80-200°C).

Selon une deuxième variante avantageuse de l'invention, la couche barrière (II) peut être formée par une composition comprenant un polyamide A, tel qu'explicité ci-avant, et un polymère cristallin présentant un module de flexion, mesuré selon la norme ISO 178, supérieur à 300 MPa, avantageusement à 800 MPa.

De préférence, le polymère cristallin est une polyoléfine, ou un mélange de polyoléfines, rigide(s) semi-cristalline(s), présentant un module de flexion, mesuré selon la norme ISO 178, supérieur à 300 MPa, la polyoléfine rigide portant, en sa totalité ou partiellement, une fonction choisie parmi les fonctions acide carboxylique, anhydride carboxylique et époxyde.

Par exemple, la composition suivante peut être utilisée : un alliage composé d'une matrice en polyamide 6 de Mn (Masse moléculaire en nombre) 18000 (par exemple l'Ultramid B3 de la société BASF), et de 30% de hdPE (polyéthylène haute densité) de densité 0.96 et d'indice de fluidité 0.3 (à 190°C sous 2,16kg), de 7% de hdPE fonctionnalisé par greffage de 1% d'anhydride maléïque d'indice de fluidité 1 (à 190°C sous 2,16kg), de 1.2% de stabilisants organiques (constitué de 0.8% de phénol Lowinox 44B25 de la société Great Lakes), de 0.2% de phosphite Irgafos 168 de la société Ciba, de 0.2% d'anti-UV Tinuvin 312 de la société Ciba), le tout faisant 100%.

D'autres compositions sont envisageables pour la réalisation de la couche barrière (II).

Selon une troisième variante avantageuse de l'invention, on peut également envisager des compositions à base de polymères, ces polymères étant préférentiellement fonctionnalisés par de l'anhydride ou par une autre fonction réactive avec les bouts de chaîne amine ou acide. A titre non limitatif, on peut citer des polymères fluorés, tels que le polyfluorure de vinylidène (PVDF), le copolymère d'éthylène et de tétrafluoroéthylène (ETFE), le copolymère d'éthylène, de tétrafluoroéthylène et d'hexafluoropropylène (EFEP), ou des polymère non fluorés comme le polysulfure de phénylène (PPS), le polynaphtalate de butylène (PBN). Ces polymères fluorés (PVDF, ETFE, EFEP) et non fluorés (PPS, PBN) seront préférentiellement fonctionnalisés.

Les couches adhésive (I) et barrière (II) des structures bicouches ou multicouche qui viennent d'être décrites présentent une excellente adhésion entre elles, adhésion qui n'est pas détériorée même par un séjour prolongé dans une essence comprenant des alcools (bio-essence).

Etant donné que cette couche barrière (II), dans ses trois variantes décrites ci-dessus, est très peu perméable aux liquides, et notamment aux carburants, elle se situe généralement à l'extrémité de la structure, en contact avec les liquides ou à un niveau sous-jacent d'une couche en contact avec les liquides.

Selon ce mode de réalisation particulier formé par la structure bicouche (I)/(II), la couche adhésive (I) peut présenter des propriétés endurantes. Elle peut alors constituer la couche externe ou support de la structure bicouche (cf structures 44 et 49 du tableau de l'annexe 1).

Selon un deuxième mode de réalisation de l'invention, la structure comprend au moins une troisième couche, dite couche endurante (III), la couche adhésive (I) selon l'invention étant disposée entre ladite couche endurante (III) et la couche barrière (II) et adhérant à leur zone de contact respective.

Ainsi, la structure multicouche peut être constituée de trois couches, dans l'ordre successif suivant (structures 1 à 14 et 29, 30 et 41 à 43 du tableau de l'annexe 1):
- une couche endurante (III) comprenant les matériaux endurants tels que définis ci-dessous,
- une couche adhésive (I) comprenant la composition adhésive selon l'invention, et
- une couche barrière (II) comprenant les matériaux barrières tels que définis ci-dessus.

La couche endurante (III) peut être formée d'une composition comprenant du polyamide C, le polyamide C étant un polyamide fortement carboné, comme explicité ci-avant. En effet, le polyamide C offre de remarquables propriétés comme une remarquable longévité, notamment une remarquable résistance au vieillissement et à la dégradation dans des milieux agressifs, humides et oxydants, comme par exemple une résistance dans l'air chaud ou dans les produits chimiques chauds. Le polyamide C possède une grande résistance au stress-cracking, au chlorure de zinc et aux produits chimiques en général. Le polyamide C a également une bonne stabilité dimensionnelle dans des milieux d'humidité variable. Il est également résistant aux chocs.

De préférence, le polyamide C est choisi parmi le PA11, le PA12, le PA10.10, le PA10.12, le PA12/10.T et leurs mélanges.

La couche endurante (III) comprenant le polyamide C défini ci-dessus peut également être choisie pour constituer la couche support ou externe de la structure multicouche.

Sur la base de ces trois types de couches, endurante (III), adhésive (I) et barrière (II), il est possible d'élaborer de nombreuses structures pouvant comprendre jusqu'à 6 couches, à partir de couches supplémentaires barrières, adhésives ou endurantes (Structures 26 et 38).

Il est possible, selon un troisième mode de réalisation de l'invention, d'utiliser deux couches de matériaux barrières, comme par exemple une couche d'un copolymère d'éthylène et de vinylalcool (EVOH) et une couche d'un polyamide faiblement carboné (polyamide A) associé à une polyoléfine particulière, l'association de ces deux couches barrières présentant des propriétés synergiques (structures 15 à 20 et 28).

Selon un quatrième mode de réalisation de l'invention, la structure comprend, dans l'ordre :
. une troisième couche, dite couche endurante (III),
. la couche adhésive (I) comprenant la composition adhésive selon l'invention,
. une seconde couche, dite couche barrière (II),
. une quatrième couche (IV),
les couches adhérant entre elles par leur zone de contact respective.

De préférence, la structure peut comprendre les couches successives suivantes :
. une troisième couche endurante (III) formée d'une composition comprenant du polyamide C,
. la couche adhésive (I) comprenant la composition adhésive selon l'invention,
. une seconde couche barrière (II) formée d'une composition comprenant de l'EVOH, et
. une quatrième couche formée d'une composition comprenant du polyamide A.

Lorsque la structure comprend une couche barrière (II) et/ou la quatrième couche (IV) constituée de polyamide A, alors, cette couche comprend au moins une polyoléfine, ou un mélange de polyoléfines, rigide(s) semi-cristalline(s), présentant un module de flexion, mesuré selon la norme ISO 178, supérieur à 300 MPa..

Ce type de structures présente l'avantage d'un effet barrière particulièrement élevé face à la bio-essence ayant des teneurs en éthanol minoritaires.

Il est également possible, selon un cinquième mode de réalisation de l'invention, de renforcer la partie externe de la structure en insérant, entre la couche adhésive (I) et la première couche endurante (III), une seconde couche endurante telle que définie ci-dessus, par exemple une couche endurante présentant une résistance aux chocs améliorée, ladite seconde couche endurante adhérant aux couches adjacentes sur leur zone de contact respective. (structure 27)

Par ailleurs, il s'avère que la couche adhésive (I) peut présenter également les propriétés d'un matériau barrière. Par conséquent, il est possible, selon un sixième mode de réalisation de l'invention, de la positionner à une extrémité de la structure et en contact des liquides, et ce
- au sein d'une structure bicouche en association avec une couche endurante (structure 31),
- au sein d'une structure tri-couche (structures 46 à 48 et 50), ou encore
- au sein d'une structure tétra-couche (structure 21).

Selon un septième mode de réalisation de l'invention, il est également possible d'envisager la structure suivante comprenant les 5 couches successives suivantes :
- couche endurante (III),
- couche adhésive (I),
- couche barrière (II),
- couche adhésive (I),
- couche barrière (II),
les couches adhérant entre elles par leur zone de contact respective (structure 40).

Selon un huitième mode de réalisation de l'invention, la couche endurante (III) peut également se retrouver à chacune des extrémités de la structure. Ces structures présentent une meilleure tenue au ZnCl₂ et aux milieux peroxydés (essence ou gazole ranci). Ces structures présentent également l'avantage d'avoir de meilleures performances en tenue choc. Par exemple, cette structure peut être une structure tri-couche (structure 32), conduisant ainsi à des structures symétriques.

Selon un neuvième mode de réalisation de l'invention, il est possible de réaliser des structures symétriques, comprenant par exemple, la succession des couches suivantes :
- une couche endurante (III)
- une couche adhésive (I) selon l'invention,
- une couche barrière (II)
- une seconde couche adhésive (I)
- une seconde couche endurante (III).
les couches adhérant entre elles par leur zone de contact respective (structures 22 à 25, 33 à 37 et 39).

De préférence, la structure comprend les cinq couches successives suivantes :
- une couche endurante (III) formée d'une composition comprenant du polyamide C,
- la couche adhésive notée (I),
- une couche barrière (II) formée d'une composition comprenant de l'EVOH,
- une autre couche adhésive (I), et
- une couche endurante (III) formée d'une composition comprenant du polyamide C,
les couches adhérant entre elles par leur zone de contact respective.

L'épaisseur de la couche adhésive (I) est avantageusement comprise entre 25 et 1000µm, et de préférence entre 25 et 150µm, lorsqu'elle a une fonction de liant.

Les structures décrites ci-dessus peuvent se présenter sous la forme d'un tube, d'un récipient, d'un film ou d'une plaque.

Lorsque ces structures se présentent sous la forme d'un tube, elles peuvent être utilisées pour le transport de fluides, tels que des liquides polaires et/ou apolaires, comme par exemple une huile, un liquide de frein, une solution d'urée, un liquide de refroidissement à base de glycol, des carburants polaires ou apolaires, de diesel, de bio-diesel, c'est-à-dire d'hydrocarbures apolaires et d'esters, en particulier d'essence, tout particulièrement de bio-essence, c'est-à-dire d'hydrocarbures apolaires et d'alcool tel que l'éthanol et le méthanol.

De telles structures sont particulièrement avantageuses pour le transport d'essence, de bio-essence, de bio-diesel et de liquide de refroidissement, classiquement à base de glycol, et de mélange d'urée et d'eau.

Les exemples suivants servent à illustrer l'invention sans toutefois présenter un caractère limitatif.

### EXEMPLES

Sauf mention contraire, les exemples se présentent sous la forme de tubes présentant un diamètre externe de 8 mm avec un diamètre interne de 6 mm, soit une épaisseur de 1 mm. Ces dimensions sont caractéristiques des dimensions de tubes que l'on retrouve dans le domaine automobile.

Ces tubes ont été fabriqués par extrusion ou co-extrusion selon les procédés classiques d'obtention de tube.

Dans les annexes jointes, ne signifie non communiqué.

### 1/ Exemples comparatifs

### 1.1 Structures des contre-exemples

Les structures suivantes représentatives de l'art antérieur ont été réalisées et testées :

| | | | | |
|---|---|---|---|---|
| 1 | PA11Cu | Liant coPA | PA6Oy | |
| 2 | PA11Cu | Liant PPg | PA6Oy | |
| 3 | PA11Cu | Liant PA610 + PA6 | pA6Oy | |
| 4 | PA11Cu | Liant PA612 + PA6 | PA6Oy | |
| 5 | PA11Cu | Liant PA610 + PA12 | pA6Oy | |
| 6 | PA11Cu | Liant PA6 + PA12 + imod | PA60y | |
| 7 | PA11Cu | PA612 | PA6Oy | |
| 8 | PA11Cu | PA610 | PA6Oy | |
| 9 | PA11Cu | Liant PA610 + PA6 + imod | PA6Oy | |
| 10 | PA11Cu | Liant PA610 + PA12 | EVOH | PA6OyE |
| 11 | PA11Cu | PA612 | EVOH | PA6OyE |
| 12 | PA11Cu | PA610 | EVOH | PA6OyE |
| 13 | PA11Cu | Liant coPA | EVOH | PA6OyE |
| 14 | PA11Cu | PA6a | | |
| 15 | PA11Cu | PA610 | | |
| 16 | PA11Cu | | | |
| 17 | PA6a | | | |
| 18 | PPAa | | | |
| 19 | EVOH | | | |
| 20 | PVDFf | | | |
| 21 | PA11Cu | PA6a | | |
| 22 | PA11Cu | EVOH | PA11Cu | |
| 23 | PA12-TL | | | |
| 24 | PA12-TL | PPAa | | |
| 25 | PA12-TL | PPAb | | |

Chaque ligne définit une structure mono- (structures 16 à 19) ou multicouche, dont les matériaux de chacune de ces couches sont repris dans les colonnes. Par exemple, la structure définit à la ligne 8 est une structure tri-couche comprenant successivement l'empilement d'une couche de PA11Cu, sur une couche de PA610, elle-même en contact sur une couche de PA6Oy. La signification des matériaux utilisés pour réaliser ces structures figure ci-après.

### 1.2 Evaluation et résultats des structures des contre-exemples

Les résultats des structures des contre-exemples sont présentés dans le tableau de l'annexe 3.

Les significations des mesures reportées dans le tableau sont les suivantes :

### Colonne 1 : Mesure de la force d'adhésion exprimée en N/cm.

Elle se traduit par la mesure de la force de pelage, exprimée en N/cm, et mesurée sur le tube de diamètre 8mm et d'épaisseur 1mm ayant subi un conditionnement de 15 jours à 50% d'humidité relative à 23°C.

La valeur donnée concerne l'interface la plus faible, c'est-à-dire la moins adhérente du multicouche, là où il y a le plus grand risque de décollement. On effectue le pelage à l'interface en faisant subir à une des parties une traction sous un angle de 90° et à une vitesse de 50mm/min selon le procédé suivant.

On prélève par découpe une bande de tube de 9mm de large. Cette bande est donc en forme de tuile et possède toujours toutes les couches du tube original. On amorce la séparation des deux couches de l'interface, que l'on souhaite évaluer à l'aide d'un couteau. On place chacune des couches ainsi séparée dans les mors d'une machine de traction. On effectue le pelage en tractionnant ces 2 couches de part et d'autre à 180 degré et a une vitesse de 50 mm/min. La bande, et donc l'interface, est quant à elle maintenue à 90 degré par rapport à la direction de traction.

Les critères d'appréciation en tiennent compte et sont :
TB = très bien, > 80
B = bien, entre 80 et > 60
AB = assez bien (acceptable), entre 60 et > 30
M = mauvais, entre 30 et 10
TM < 10 = très mauvais

### Colonne 2 : Mesure de la force d'adhésion exprimée en N/cm

Même test que pour la colonne 1, sauf que l'intérieur du tube était rempli par une bio-essence E50 à 80°C pendant 200h. La bio-essence E50 est un mélange comprenant en masse 50% d'éthanol , 44% d'essence L, 5% d'eau et 1% de Méthanol selon la norme B31 5220 de la société Peugeot SA, l'essence dite "L" étant de l'essence sans plomb de référence de la norme Euro, référencé sous le code E-H-003. Ces conditions de tests sont beaucoup plus sévères que les précédentes. Les critères d'appréciation en tiennent compte et sont :
TB = très bien, > 40
B = bien, > 30 à <= 40
AB = assez bien (acceptable), > 20 à <= 30
M = mauvais, > 10 à <= 20
TM = très mauvais, <= 10

### Colonne 3 : Estimation qualitative du choc à froid sur la gamme de température, d'après les résultats des colonnes 4, 5 et 6.

Echelle de valeurs qualitatives
TB = très bien
B+ = bien à très bien (B++ entre B+ et TB)
B = bien
AB+ = assez bien à bien,
AB = assez bien (acceptable)
M = mauvais / insuffisant
TM = très mauvais

### Colonne 4 : Résistance au choc à -30°C.

Il s'agit d'un test de choc selon le protocole PSA (société Peugeot SA) selon la norme B21 5540. Le tube est choqué selon ce protocole de test à -30°C. On relève le pourcentage de casse (mieux si faible).

### Colonne 5 : Résistance au choc à -40°C

Il s'agit d'un test de choc selon le protocole VW (société Volkswagen) selon la norme TL 52435. Le tube est choqué selon ce protocole de test à -40°C. On relève le pourcentage de casse.

### Colonne 6 : Résistance au choc à-60°C

Il s'agit du même test que précédemment, mais réalisé à -60°C.

### Colonne 7 : vieillissement oxydatif

Il s'agit de la résistance du tube multicouche au vieillissement oxydatif dans l'air chaud. Le tube est mis à vieillir dans l'air à 150°C, puis il est choqué avec un choc selon la norme DIN 73378, ce choc étant réalisé à -40°C, on indique la demi-vie (en heure) qui correspond au temps au bout duquel 50% des tubes testés se cassent. Un commentaire qualitatif accompagne cette valeur.

### Colonne 8 et 9 : Performance de l'effet barrière

La colonne 8 est une appréciation qualitative de l'effet barrière, ce dernier étant quantifié (colonne 9) par une mesure de perméation. L'effet barrière est décrit qualitativement et quantitativement par une mesure de perméation. Plus la perméabilité ou perméation est basse, meilleure est la performance barrière. Il s'agit d'une mesure de la perméation dynamique (norme PSA B31 5210) dans du carburant CE10 à 40°C en g.mm/m²/24h. Le carburant CE10 comprend 10% d'éthanol et 90% d'essence de référence "fluide C", qui est un mélange d'isooctane et de toluène en quantité identique. Le carburant circule à l'intérieur du tube, à l'extérieur, il y a de l'air.

### Colonne 10 : Résistance au chlorure de zinc (face interne du tube et côté raccord là où le tube est coupé).

La mesure de la résistance au chlorure de zinc est effectuée selon la norme SAE J2260. Les tubes, préalablement cintrés avec un rayon de courbure de 40mm, sont immergés dans une solution à 50% de ZnCl₂. On note le temps au bout duquel apparaissent des fissures ou la première casse.

Les critères d'appréciation sont les suivants.
TB = très bien, correspond à un temps >= 1500h
B = très bien, correspond à un temps >= 800h
AB = assez bien, correspond à un temps >= 400h
M = mauvais, correspond à un temps <=100h
TM = très mauvais, correspond à un temps <= 1h

### Colonne 11 : Estimation qualitative et quantitative de la flexibilité du tube multicouche.

Une bonne flexibilité est avantageuse pour le montage sur le véhicule. Par bonne flexibilité, on entend un module de flexion de moins de 1000 MPa mesuré selon la norme ISO178.
TB = 300-500MPa
B+ = 500-700MPa
B = 700-900MPa
AB = 900-1200MPa
M = 1500-2000MPa
TM = > 2000 MPa

Les structures des contre-exemples illustrent que soit l'adhésion est insuffisante, soit l'adhésion après immersion dans le bio-carburant est insuffisante, soit le vieillissement, soit le choc ne répond pas aux critères recherchés. Pour le contre-exemple 23, l'adhésion n'est pas mesurée, car la structure est mono-couche.

### 2/ Exemples de composition adhésive selon l'invention

Les compositions selon l'invention suivantes ont été préparées. Les quantités de produits sont exprimées % en poids par rapport au poids total de la composition.

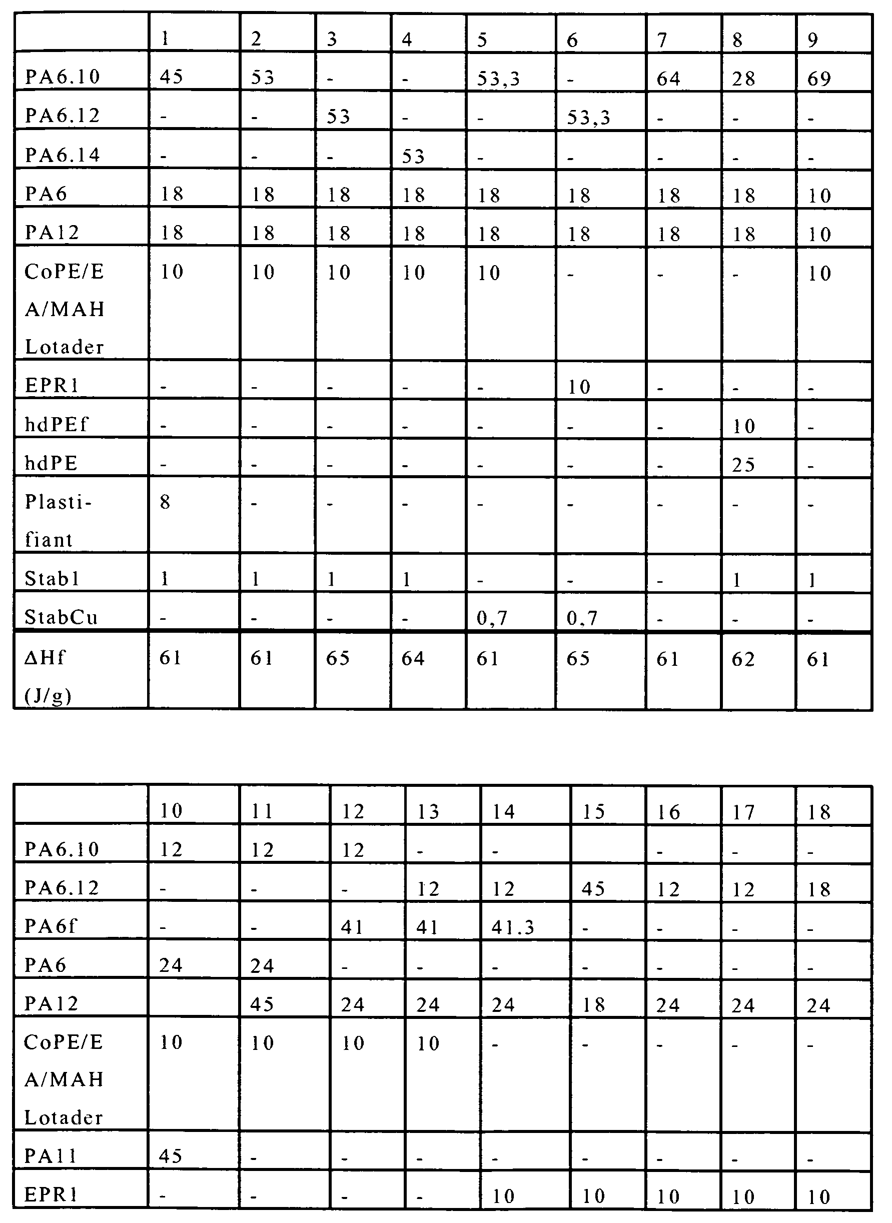

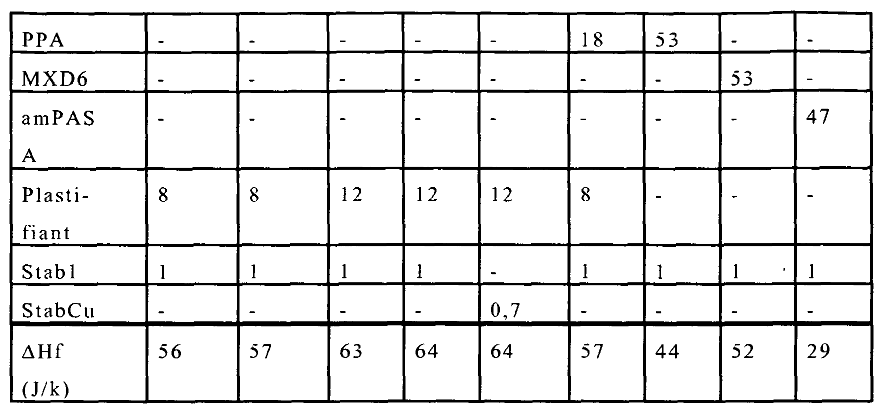

Les enthalpies de fusion mesurées (ΔHf (J/g)) et reportées dans les tableaux ci-dessus correspondent à la moyenne pondérée massique des enthalpies de fusion des polyamides présents dans les compositions. Elles sont mesurées par DSC (Differential Scanning Calorimetry) telle que définie ci-dessus.

Les compositions adhésives 1 à 18 sont préparées selon la méthode usuelle de l'homme de l'art, par compoundage, c'est-à-dire qu'elles sont mélangées à l'état fondu dans une extrudeuse, typiquement un extrudeuse double-vis de type Werner & Pfleiderer.

Ces compositions adhésives peuvent être destinées à constituer une couche adhésive aux seins de structures multicouches, telles que celles des exemples figurant en ANNEXE 1.

Il existe une alternative à cette méthode. Elle consiste à utiliser la composition adhésive selon l'invention, comme additif dans une couche de matière non adhésive. Pour ce faire, après avoir préparé classiquement par compoundage une composition adhésive, on mélange ladite composition adhésive en quantité souhaitée avec une composition non adhésive, qui constitue une des couches non adhésive de la structure multicouche. Ce mélange réalisé à l'état solide en combinant les deux compositions s'appelle « dry-blend » en langue anglaise.

Cette technique permet de conférer à une couche non adhésive l'adhésion recherchée. Cette technique présente l'avantage de diminuer le nombre de couches nécessaires pour la structure multicouche.

Cette technique (« dry-blend ») peut conduire à une composition adhésive selon l'invention, dans la mesure, où les caractéristiques de la composition selon l'invention avant mélange sont conservées après mélange.

Les compositions suivantes sont obtenues à partir d'un mélange « dry-blend » et sont après mélange des compositions selon l'invention :
Composition n°19 :
   PA12-TL + 20% de la composition adhésive n°1 (base PA610)
Composition n°20 :
   PA12-TL + 20% de la composition adhésive n°13 (base PA6)
Composition n°21
   PA6a + 20% de la composition adhésive n° 1 (base PA610)
Composition n°22
   PPAa + 20% de la composition adhésive n° 1 (base PA610)
Composition n°23
   PPAa + 20% de la composition adhésive n°11 (base PA12)

Tous ces exemples de compositions obtenues par la technique de « dry-blend » sont des compositions comprenant au moins 3 polyamides en C_{A}, C_{B}, C_{C}, adéquatement différents et répondant aux critères de l'invention.

### 3/ Evaluation et résultats des compositions adhésives selon l'invention 1 à 18

Les compositions 1 à 18 définies dans le tableau ci-dessus ont subi le test de performance en choc décrit ci-dessus pour les colonnes 3 à 6 de l'annexe 3 des tests menés pour les structures des contre-exemples.

Pour certaines de ces compositions, le module de flexion est mesuré ainsi que le MFI.

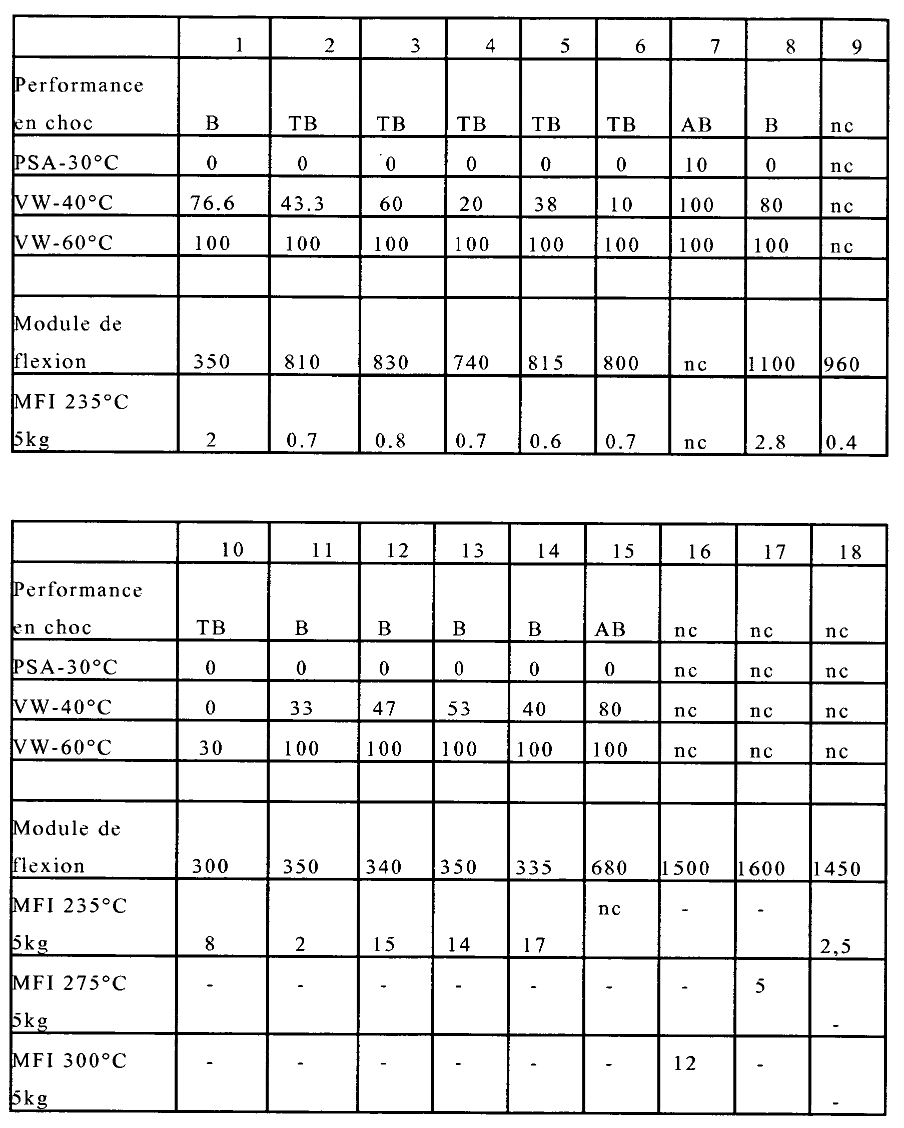

Pour ces exemples de composition 1 à 18, les propriétés décrites répondent aux mêmes définitions que pour les tableaux en Annexe 2 et Annexe 3.

### 5/ Exemples de structures multicouches

Les exemples de structures multicouches selon l'invention sont rassemblés dans le tableau de l'Annexe 1.

Les résultats des structures multicouches selon l'invention figurant dans le tableau de l'annexe 1 sont reportés dans le tableau de l'annexe 2, les résultats reportés dans les colonnes correspondent aux mesures définies ci-dessus avec la colonne 12 supplémentaire.

### Colonne 12 : caractère antistatique

Cette colonne signale le caractère antistatique sur la face interne du tube multicouche. Le caractère antistatique est parfois requis dans les cahiers des charges de certains pays. Ce caractère correspond classiquement à une valeur de résistivité superficielle inférieure ou égale à 10⁶ ohm. Ce caractère peut donc être un avantage supplémentaire dans certains cas.

Les composants des structures mises en oeuvre dans les exemples ont les significations suivantes :
PA6.10 signifiant Polyamide 6.10 de Mn (masse moléculaire en nombre) 30000 et ayant un excédent de bout de chaîne amine NH2 par rapport au bout de chaîne COOH, la concentration en bout de chaîne NH2 étant de 45 µeq/g. Sa température de fusion est de 223°C et son enthalpie de fusion est de 61 kJ/kg.
PA6.12 signifiant Polyamide 6.12 de Mn (masse moléculaire en nombre) 29000 et ayant un excédent de bout de chaîne amine NH2 par rapport au bout de chaîne COOH, la concentration en bout de chaîne NH2 étant de 47 µeq/g. Sa température de fusion est de 218°C et son enthalpie de fusion est de 67 kJ/kg.
PA6.14 signifiant Polyamide 6.14 de Mn (masse moléculaire en nombre) 30000 et ayant un excédent de bout de chaîne amine NH2 par rapport au bout de chaîne COOH, la concentration en bout de chaîne NH2 étant de 45 µeq/g. Sa température de fusion est de 202°C et son enthalpie de fusion est de 66 kJ/kg.
PA6. signifiant Polyamide 6 de Mn (masse moléculaire en nombre) 28000. Sa température de fusion est de 220°C et son enthalpie de fusion est de 68 kJ/kg.
PA6f signifie Polyamide 6 de Mn (masse moléculaire en nombre) 18000. Sa température de fusion est de 220°C.
PA12. signifiant Polyamide 12 de Mn (masse moléculaire en nombre) 35000. Sa température de fusion est de 178°C et son enthalpie de fusion est de 54 kJ/kg.
PA11. signifiant Polyamide 11 de Mn (masse moléculaire en nombre) 29000. Sa température de fusion est de 190°C et son enthalpie de fusion est de 56 kJ/kg.
PA11Cu désigne une composition à base de polyamide 11 de Mn (masse moléculaire en nombre) 29000, contenant 5% de plastifiant BBSA (benzyl butyl sulfonamide), 6% de modifiant choc type éthylène/acrylate d'éthyle/anhydride en rapport massique 68,5/30/1,5 (MFI 6 à 190°C sous 2.16 kg), et de 0.5% de stabilisant à base d'iodure de cuivre et de potassium de type Iodide P201 (société Ciba). La température de fusion de cette composition est de 185°C.
PA1210T-Cu désigne un coPA12/10.T, c'est-à-dire un copolyamide 12 avec 50% en mol de 10.T, 10.T correspondant à la diamine linéaire en C10 et T à l'acide téréphtalique, ce copolymère étant de Mn 20000, ce copolymère étant stabilisé par 0.5% de stabilisant à base d'iodure de cuivre et de potassium de type Iodide P201 (société Ciba).
PA1010Cu désigne une composition à base de polyamide 10.10 de Mn (masse moléculaire en nombre) 33000, contenant 10.5% de plastifiant BBSA (benzyl butyl sulfonamide), et 12% d'EPR fonctionnalisé anhydride Exxelor VA1801 (société Exxon), et de 0.5% de stabilisant à base d'iodure de cuivre et de potassium de type Iodide P201 (société Ciba). La température de fusion de cette composition est de 196°C.
PA11-TL désigne une composition à base de polyamide 11 de Mn (masse moléculaire en nombre) 29000, contenant 5% de plastifiant BBSA (benzyl butyl sulfonamide), 6% de modifiant choc type éthylène/acrylate d'éthyle/anhydride en rapport massique 68,5/30/1,5 (MFI 6 à 190°C sous 2.16 kg), et de 1.2% de stabilisants organiques (constitués de 0.8% de phénol Lowinox 44B25 de la société Great Lakes, de 0.2% de phosphite Irgafos 168 de la société Ciba, de 0.2% d'anti-UV Tinuvin 312 de la société Ciba). La température de fusion de cette composition est de 185°C.
PA12-TL. désigne une composition à base de polyamide 12 de Mn (masse moléculaire en nombre) 35000, contenant 6% de plastifiant BBSA (benzyl butyl sulfonamide), et 6% d'EPR fonctionnalisé anhydride Exxelor VA1801 (société Exxon), et de 1.2% de stabilisants organiques constitués de 0.8% de phénol (Lowinox 44B25 de la société Great Lakes), de 0.2% de phosphite (Irgafos 168 de la société Ciba, de 0.2% d'anti-UV (Tinuvin 312 de la société Ciba). La température de fusion de cette composition est de 175°C.
PA6a. désigne une composition à base de polyamide 6 de Mn (masse moléculaire en nombre) 28000, contenant 10% de plastifiant BBSA (benzyl butyl sulfonamide), 12% d'EPR fonctionnalisé Exxelor VA1803 (société Exxon) et de 1.2% de stabilisants organiques constitués de 0.8% de phénol (Lowinox 44B25 de la société Great Lakes), de 0.2% de phosphite (Irgafos 168 de la société Ciba), de 0.2% d'anti-UV (Tinuvin 312 de la société Ciba). La température de fusion de cette composition est de 215°C.
PA6p1 désigne une composition à base de polyamide 6 de Mn (masse moléculaire en nombre) 18000, contenant 12% de plastifiant BBSA et de 1.2% de stabilisants organiques constitués de 0.8% de phénol (Lowinox 44B25 de la société Great Lakes), de 0.2% de phosphite (Irgafos 168 de la société Ciba), de 0.2% d'anti-UV (Tinuvin 312 de la société Ciba). La température de fusion de cette composition est de 215°C.
PA6Oy désigne un alliage composé d'une matrice en polyamide 6 de Mn 18000 (par exemple l'Ultramid B3 de la société BASF), et de 30% de hdPE (polyéthylène haute densité) de densité 0.96 et d'indice de fluidité 0.3 (à 190°C sous 2,16kg), de 7% de hdPE fonctionnalisé par greffage de 1% d'anhydride maléïque d'indice de fluidité 1 (à 190°C sous 2,16kg), de 1.2% de stabilisants organiques (constitué de 0.8% de phénol Lowinox 44B25 de la société Great Lakes), de 0.2% de phosphite Irgafos 168 de la société Ciba, de 0.2% d'anti-UV Tinuvin 312 de la socitéé Ciba), le tout faisant 100%. La température de fusion de cette composition est de 220°C.
PA6OyE. désigne un alliage composé d'une matrice en polyamide 6 de Mn 18000 (par exemple l'Ultramid B3 de la société BASF), et de 25% de hdPE (polyéthylène haute densité) de densité 0.96 et d'indice de fluidité 0.3 (à 190°C sous 2,16kg), de 10% d'EPR fonctionnalisé Exxelor VA1803 (société Exxon), de 8% de plastifiant BBSA (benzyl butyl sulfonamide), de 1.2% de stabilisants organiques constitués de 0.8% de phénol (Lowinox 44B25 de la société Great Lakes), de 0.2% de phosphite (Irgafos 168 de la société Ciba), de 0.2% d'anti-UV (Tinuvin 312 de la société Ciba), le tout faisant 100%. La température de fusion de cette composition est de 220°C.
PA11Choc-TL. désigne une composition à base de polyamide 11 de Mn (masse moléculaire en nombre) 29000, contenant 20% de modifiant choc type éthylène/acrylate d'éthyle/anhydride en rapport massique 68,5/30/1,5 (MFI 6 à 190°C sous 2.16 kg), et de 1.2% de stabilisants organiques constitués de 0.8% de phénol (Lowinox 44B25 de la société Great Lakes), de 0.2% de phosphite (Irgafos 168 de la société Ciba), de 0.2% d'anti-UV (Tinuvin 312 de la société Ciba). La température de fusion de cette composition est de 190°C.
PA11-C désigne une composition à base de polyamide 11 de Mn (masse moléculaire en nombre) 29000, contenant 10% de plastifiant BBSA (benzyl butyl sulfonamide), 22% de noir de carbone Ensaco 200, et de 1.2% de stabilisants organiques (constitué de 0.8% de phénol Lowinox 44B25 de la société Great Lakes, de 0.2% de phosphite Irgafos 168 de la société Ciba, de 0.2% d'anti-UV Tinuvin 312 de la société Ciba). La température de fusion de cette composition est de 185°C.
PA1210T-TL désigne un coPA12/10.T, c'est-à-dire un copolyamide 12 avec 50% en mol de 10.T, 10.T correspondant à la diamine linéaire en C10 et T à l'acide téréphtalique, ce copolymère étant de Mn 20000, ce copolymère étant stabilisé par 1.2% de stabilisants organiques constitués de 0.8% de phénol (Lowinox 44B25 de la société Great Lakes), de 0.2% de phosphite (Irgafos 168 de la société Ciba), de 0.2% d'anti-UV (Tinuvin 312 de la société Ciba).
PA11Choc désigne une composition à base de polyamide 11 de Mn (masse moléculaire en nombre) 29000, contenant 20% de modifiant choc type éthylène/acrylate d'éthyle/anhydride en rapport massique 68,5/30/1,5 (MFI 6 à 190°C sous 2.16 kg), et 0.5% de stabilisant à base d'iodure de cuivre et de potassium de type Iodide P201 (société Ciba). La température de fusion de cette composition est de 190°C.
PA11p1 désigne une composition à base de polyamide 11 de Mn (masse moléculaire en nombre) 35000, contenant 12% de plastifiant BBSA (benzyl butyl sulfonamide) et de 1.2% de stabilisants organiques (constitués de 0.8% de phénol Lowinox 44B25 de la société Great Lakes, de 0.2% de phosphite Irgafos 168 de la société Ciba, de 0.2% d'anti-UV Tinuvin 312 de la société Ciba). La température de fusion de cette composition est de 185°C.
PA12-Cu. désigne une composition à base de polyamide 12 de Mn (masse moléculaire en nombre) 35000, contenant 6% de plastifiant BBSA (benzyl butyl sulfonamide), et 6% d'EPR fonctionnalisé anhydride Exxelor VA1801 (société Exxon), et de 0.5% de stabilisant à base d'iodure de cuivre et de potassium de type Iodide P201 (société Ciba). La température de fusion de cette composition est de 175°C.
MXD.6 signifie Polyamide de type MXD.6, MXD désignant la m-xylylène diamine, de Mn 25000, de température de fusion 237°C et d'enthalpie de fusion de 46 kJ/kg. Ce type de polyamide est par exemple commercialisé par la société Mitsubishi sous le nom de MX Nylon.
MXD6hi désigne un composition à base de copolyamide de type MXD.6 et de modifiant choc, commercialisée sous le nom de Ixef BXT-2000 par la société Solvay. Sa température de fusion est de 237°C.
PPA signifie polyphtalamide de type copolyamide 6.T/6 en proportion massique de 71 et 29% de, de Mn 13500, en autre commercialisé sous le nom de Ultramid TKR4351 par la société BASF. Sa température de fusion est de 295°C et son enthalpie de fusion est de 34 kJ/kg.
PPAa. désigne une composition à base de polyphtalamide de type coPA6.T/6.I/6.6 Amodel EXT1800 de la société Solvay. La température de fusion de cette composition est de 310°C.
PPAb. désigne une composition à base de polyphtalamide de type copolyamide 6.T/6 Ultramid TKR4351 de la société BASF, et de 25% d'EPR fonctionnalisé Exxelor VA1803 (société Exxon), et de 0.5% de stabilisant à base d'iodure de cuivre et de potassium de type Iodide P201 (société Ciba). La température de fusion de cette composition est de 295°C.
amPASA signifie polyphtalamide de type copolyamide coPA6.I/6.T, à 70% en masse de motif 6.I, et de Mn 14000. Ce produit est amorphe, sa température de transition vitreuse Tg est de 125°C.
amPASAa désigne une composition à base de polyphtalamide de type copolyamide coPA6.I/6.T, à 70% en masse de motif 6.I, et de 25% d'EPR fonctionnalisé Exxelor VA1803 (société Exxon), et de 0.5% de stabilisant à base d'iodure de cuivre et de potassium de type Iodide P201 (société Ciba). La température de transition vitreuse de cette composition amorphe est de 115°C.
coPE/EA/MAH. signifiant copolymère d'éthylène, d'acrylate d'éthyle et d'anhydride maléique en rapport massique 68,5/30/1,5 (MFI 6 à 190°C sous 2.16 kg) utilisé en tant que modifiant choc. Son module de flexion est de 30 MPa environ selon la norme ISO178.
EPR1. désignant un copolymère d'éthylène et de propylène à caractère élastomère fonctionnalisé par un groupe réactif à fonction anhydride (à 0.5-1% en masse), de MFI 9 (à 230°C, sous) 10kg, de type Exxellor VA1801 de la société Exxon utilisé en tant que modifiant choc. Son module de flexion est de 10 MPa environ selon la norme ISO178
hdPE désignant un polyéthylène haute densité de densité 0,962, de température de fusion de 136°C, de MFI à 190°C sous 2,16 kg de 0,6.
hdPEf désignant un polyéthylène haute densité fonctionnalisé par un groupe réactif pouvant réagir avec un des bout de chaînes (ou autres fonctions réactives) du polyamide de densité 0,960, de température de fusion de 134°C, de MFI à 190°C sous 2,16 kg de 2.
Stab1. désignant un mélange de stabilisants organiques constitué de 0.8% de phénol Lowinox 44B25 de la société Great Lakes et de 0.2% de phosphite Irgafos 168 de la société Ciba.
StabCu. désignant un mélange de stabilisants minéraux à base d'iodure de cuivre et de potassium de type Iodide P201 (société Ciba).
Plastifiant. désignant le benzyl butyl sulfonamide (BBSA).
EVOH désigne un copolymère d'éthylène vinyl alcool par exemple Soarnol DC3203RB de la société Nippon Gosei. La température de fusion de cette composition est de 183°C.
EVOHim. désigne une composition à base d'EVOH et de modifiant choc d'EPR fonctionnalisé Exxelor VA1803 (société Exxon). La température de fusion de cette composition est de 183°C.
EVOH100 désigne un copolymère d'éthylène vinyl alcool contenant 24% de comonomère éthylène, fabriqué par la société Eval sous le nom d'Eval M100B. La température de fusion de cette composition est de 194°C.
PVDFf désigne une composition à base de PVDF fonctionnalisé par de l'anhydride maléique. La température de fusion de cette composition est de 170°C.
ETFE désigne une composition à base d'ETFE (copolymère d'éthylène et de tetrafluoroéthylène) de connue sous la dénomination EP7000, de la société Daikin. La température de fusion de cette composition est de 255°C.
EFEP-C. désigne une composition conductrice à base d' EFEP (copolymère d'éthylène, de tetrafluoroéthylène et d'hexafluoro propylène) de connue sous la dénomination RP5000AS, de la société Daikin. La température de fusion de cette composition est de 195°C.
Liant coPA. désigne une composition à base de 40% copolyamide 6/12 (de ratio 70/30 en masse) de Mn 16000, et de 40% copolyamide 6/12 (de ratio 70/30 en masse) de Mn 16000.
Liant PPg. désigne une composition à base de PP (polypropylène) greffé avec de l'anhydride maléique, connu sous le nom d'Admer QF551A de la société Mitsui.
Liant PA610 + PA6. désigne une composition à base de PA610 (de Mn 30000, et tel que défini par ailleurs) et de 36% de PA6 (de Mn 28000, et tel que défini par ailleurs) et de 1.2% de stabilisants organiques (constitué de 0.8% de phénol Lowinox 44B25 de la société Great Lakes, de 0.2% de phosphite Irgafos 168 de la société Ciba, de 0.2% d'anti-UV Tinuvin 312 de la société Ciba).
Liant PA612 + PA6. désigne une composition à base de PA612 (de Mn 29000, et tel que défini par ailleurs) et de 36% de PA6 (de Mn 28000, et tel que défini par ailleurs) et de 1.2% de stabilisants organiques (constitué de 0.8% de phénol Lowinox 44B25 de la société Great Lakes, de 0.2% de phosphite Irgafos 168 de la société Ciba, de 0.2% d'anti-UV Tinuvin 312 de la société Ciba).
Liant PA610 + PA12. désigne une composition à base de PA610 (de Mn 30000, et tel que défini par ailleurs) et de 36% de PA12 (de Mn 35000, et tel que défini par ailleurs) et de 1.2% de stabilisants organiques (constitué de 0.8% de phénol Lowinox 44B25 de la société Great Lakes, de 0.2% de phosphite Irgafos 168 de la société Ciba, de 0.2% d'anti-UV Tinuvin 312 de la société Ciba).
Liant PA6 + PA12 + imod. Désigne une composition à base de 40% PA6 (de Mn 28000, et tel que défini par ailleurs), de 40% de PA12 (de Mn 35000, et tel que défini par ailleurs) et de 20% d'EPR fonctionnalisé Exxelor VA1801 (société Exxon) et de 1.2% de stabilisants organiques (constitué de 0.8% de phénol Lowinox 44B25 de la société Great Lakes, de 0.2% de phosphite Irgafos 168 de la société Ciba, de 0.2% d'anti-UV Tinuvin 312 de la société Ciba).
Liant PA610 + PA6 + imod. Désigne une composition à base de 40% PA6.10 (de Mn 30000, et tel que défini par ailleurs), de 40% de PA6 (de Mn 28000, et tel que défini par ailleurs) et de 20% de modifiant choc type éthylène/acrylate d'éthyle/anhydride en rapport massique 68,5/30/1,5 (MFI 6 à 190°C sous 2.16 kg), et de 1.2% de stabilisants organiques (constitué de 0.8% de phénol Lowinox 44B25 de la société Great Lakes, de 0.2% de phosphite Irgafos 168 de la société Ciba, de 0.2% d'anti-UV Tinuvin 312 de la société Ciba).

### Exemple de fabrication des structures multicouches : cas des tubes

Les tubes multicouches sont réalisés par coextrusion. On utilise une ligne industrielle d'extrusion multicouche McNeil, équipée de 5 extrudeuses, connectées à une tête d'extrusion multicouche à mandrins spiralés.

Les vis utilisées sont des monovis d'extrusion ayant des profils de vis adaptés aux polyamides. En plus, des 5 extrudeuses et de la tête d'extrusion multicouche, la ligne d'extrusion comporte :
· un ensemble filière-poinçon, situé en bout de tête de coextrusion ; le diamètre intérieur de la filière et le diamètre extérieur du poinçon sont choisis en fonction de la structure à réaliser et des matériaux qui la composent, ainsi que des dimensions du tube et de la vitesse de ligne ;
· un bac à vide avec un niveau de dépression réglable. Dans ce bac circule de l'eau maintenue à 20°C en général, dans laquelle est plongé un calibre permettant de conformer le tube dans ses dimensions finales. Le diamètre du calibre est adapté aux dimensions du tube à réaliser, typiquement de 8,5 à 10 mm pour un tube de diamètre externe de 8 mm et d'épaisseur de 1 mm ;
· une succession de bacs de refroidissement dans lesquels de l'eau est maintenue vers 20°C, permettant de refroidir le tube le long de parcours de la tête au banc de tirage ;
· un mesureur de diamètre ;
· un banc de tirage.

La configuration à 5 extrudeuses est utilisée pour réaliser les tubes allant de 2 couches à 5 couches. Dans le cas des structures dont le nombre de couches est inférieur à 5, plusieurs extrudeuses sont alors alimentées avec la même matière.

Dans le cas des structures comportant 6 couches, une extrudeuse supplémentaire est connectée et un mandrin spiralé est ajouté à la tête existante, en vue de réaliser la couche interne, en contact avec le fluide.

Avant les essais, afin d'assurer les meilleures propriétés au tube et une bonne qualité d'extrusion, on vérifie que les matières extrudées aient un taux d'humidité résiduel avant extrusion inférieur à 0.08%. Dans le cas contraire, on procède à une étape supplémentaire de séchage de la matière avant les essais, généralement dans un sécheur sous vide, pendant 1 nuit à 80°C.

On se reportera à l'Annexe 4 qui présente de manière détaillée les paramètres d'extrusion mis en oeuvre pour les exemples 33 (5 couches), 18 (4 couches) et 2 (3 couches) de l'Annexe 1, pour la fabrication de tubes de diamètre externe de 8 mm avec un diamètre interne de 6 mm, soit une épaisseur de 1 mm

Pour ces trois exemples particuliers, comme pour tous les autres, les tubes, qui répondent aux caractéristiques décrites dans la présente demande de brevet, ont été prélevés, après stabilisation des paramètres d'extrusion, les dimensions du tubes visées n'évoluant plus dans le temps. Le diamètre est contrôlé par un mesureur de diamètre laser installé en bout de ligne.

Généralement, la vitesse de ligne est typiquement de 20m/min. Elle varie généralement entre 5 et 100m/min.

La vitesse de vis des extrudeuses dépend de l'épaisseur de la couche et du diamètre de la vis comme cela est connu de l'homme de l'art.

De manière générale, les température des extrudeuses et des outillages (tête et raccord) doivent être réglées de sorte à être suffisamment supérieures à la température de fusion des compositions considérées, de façon à ce qu'elles demeurent à l'état fondu, évitant ainsi qu'elles se solidifient et bloquent la machine.

Pour les compositions PA11, PA12, PA6, PA610, PA612, PA614, MXD6, EVOH, PVDF, amPASA, il faut assurer typiquement une température d'environ 240°C, voire jusqu'à 260°C si le produit est particulièrement visqueux. Pour ce faire, on règle au moins une partie des zones de chauffe de la machine, en particulier la partie aval de la vis et l'outillage aval (tête d'extrusion et raccord) à 240°C environ, de manière à obtenir la température de mélange visée.

Pour les compositions à base de PA1210T, d'ETFE, il faut travailler à 270°C environ. Pour les compositions à base de PPA, PPAa, il faut travailler à 310°C environ. Pour les compositions à base de PPAb, il faut travailler à 320°C environ.

Des exemples de structures multi-couches mises en oeuvre à partir de la méthode « dry-blend » figurent dans l'annexe 1. On peut l'illustrer par l'exemple 83, qu'on peut mettre en regard de l'exemple 53. Au lieu de rajouter la composition adhésive 13 sous forme d'une couche de liant pour faire adhérer la couche « PA12-TL » sur la couche « PPAb », on rajoute cette composition adhésive 13 au sein de la couche « PA12-TL », ce qui confère à cette dernière la capacité d'adhérer sur la couche « PPAb ». Pour ce faire, juste avant de fabriquer le tube multicouche, on mélange les granulés de la composition « PA12-TL » à 20% de granulés de la composition adhérente 13. On introduit ensuite ce mélange dans l'extrudeuse multicouche. Ce mélange cumule alors les rôles de couche externe endurante (III) et de couche adhésive (I).

Remarques concernant les propriétés de certaines structures

Les compositions adhésives où le polyamide majoritaire est un polyamide de type C_{A} offrent certains avantages. Ainsi dans les exemples 56 et 69, la couche intermédiaire de liant joue aussi le rôle de couche barrière ou semi-barrière (couche de type II ou IV). Ainsi, en comparaisons des structures 52 et 57, la couche de "PA6a" peut être remplacée par une couche de liant, en épaisseur équivalente. Ainsi une composition adhésive (liant), dans laquelle le polyamide majoritaire est un polyamide de type C_{A} (composition 12 à 14, 16 à 18) cumulent à la fois le caractère de liant et de couche barrière, (les couches barrière type "PA6a", "PA6OyE", "PPAa" n'étant pas adhérentes aux couches "endurantes" à base de polyamide C_{C} tel le "PA12-TL"). Il est donc intéressant d'utiliser des compositions adhésives, où le polyamide majoritaire est un polyamide de type C_{A}, et a des épaisseurs suffisamment fortes pour bien bénéficier de l'effet barrière ou d'un surcroît de cet effet.

Les structures des exemples 64 et 65 illustrent le surcroît de performances en perméabilité (effet barrière accru) en utilisant ce type de composition adhésive, où le polyamide majoritaire est un polyamide de type C_{A} et en particulier de type très barrière tel un "PPA" ou un "MAXD.6".

On peut également observer des synergies remarquables. Par exemple, le tube multicouche 69 présente, par rapport à ses témoins, d'une part le tube mono-matière « PA12-TL » : contre-exemple 23 et d'autre part le tube mono-matière de composition adhésive 13, des avantages en choc, en barrières sans pour autant présenter de désavantage en flexibilité, en tenue au vieillissement, en risque de perte d'adhésion entre les couches. Les tubes multicouches 70 et 71 sont également très intéressants, comparé aux tubes monocouche : contre-exemple 23 et aux compositions adhésives 13 et 14, non seulement en choc et en barrière, mais également en vieillissement. Le tube exemple 60 montre également un intéressant profil de propriétés.

Figurent également parmi les exemples, des structures multicouches où le liant comprend en tant que polyamide majoritaire un polyamide de type C_{C}. L'avantage devient alors de cumuler les fonctions de couche de liant (couche de type I) et de couche endurante (couche de type III). En effet, on conserve une bonne part des qualités de souplesse, de choc, de tenue au chlorure de zinc, de tenue au vieillissement d'une couche endurante de type III. Il est donc possible qu'un tel liant fasse office de couche extérieure.

### ANNEXE 1

| | III | I | II | | | | |
|---|---|---|---|---|---|---|---|
| 1 | PA11Cu | Composition adhésive 2 | PA6a | épaisseurs 475/50/475 µm | | | |
| 2 | PA11Cu | Composition adhésive 2 | PA60 | | | | |
| 3 | PA1210T-Cu | Composition adhésive 2 | PA6Oy | | | | |
| 4 | PA1010Cu | Composition adhésive 3 | pA6Oy | | | | |
| 5 | PA11Cu | Composition adhésive 2 | PA6OyE | | | | |
| 6 | PA11-TL | Composition adhésive 2 | PA6OyE | | | | |
| 7 | PA12-TL | Composition adhésive 2 | PA6OyE | | | | |
| 8 | PA11Cu | Composition adhésive 3 | PA6OyE | | | | |
| 9 | PA11Cu | Composition adhésive 1 | PA6OyE | | | | |
| 10 | PA11Cu | Composition adhésive 8 | PA6OyE | | | | |
| 11 | PA11Cu | Composition adhésive 7 | PA6OyE | | | | |
| 12 | PA11Cu | Composition adhésive 2 | PPAa | | | | |
| 13 | PA11Cu | Composition adhésive 2 | PPAb | | | | |
| 14 | PA1210T-Cu | Composition adhésive 2 | PPAb | | | | |

| | III | I | II | II | | | |
|---|---|---|---|---|---|---|---|
| 15 | PA11Cu | Composition adhésive 2 | PPAa | PA6OyE | épaisseurs 425/50/100/425µm | | |
| 16 | PA11Cu | Composition adhésive 2 | PPAb | PA6OyE | | | |
| 17 | PA11Cu | Composition adhésive 2 | amPASAa | PA6OyE | | | |
| 18 | PA11Cu | Composition adhésive 2 | EVOH | PA6OyE | | | |
| 19 | PA11Cu | Composition adhésive 9 | EVOH | PA6OyE | | | |
| 20 | PA11Cu | Composition adhésive 2 | EVOHim | PA6OyE | | | |

| | III | I | II | I | | | |
|---|---|---|---|---|---|---|---|
| 21 | PA11Cu | Composition adhésive 2 | PA6Oy | Composition adhésive 2 | épaisseurs 475/50/325/150 µm | | |

| | III | I | II | I | III | | |
|---|---|---|---|---|---|---|---|
| 22 | PA11Cu | Composition adhésive 2 | PA6Oy | Composition adhésive Composition adhésive 2 | PA11-TL | épaisseurs 225/50/450/50/225 µm | |
| 23 | PA11Cu | Composition adhésive 2 | PPAb | Composition adhésive 2 | PA11-TL | épaisseurs 390/50/120/50/390 µm | |
| 24 | PA11Cu | Composition adhésive 2 | amPASAa | Composition adhésive 2 | PA11-TL | | |
| 25 | PA11Cu | Composition adhésive 2 | PA6Oy | Composition adhésive 2 | PA121OT-TL | | |

| | III | I | II | II | I | III | |
|---|---|---|---|---|---|---|---|
| 26 | PA11Cu | Composition adhésive 2 | EVOH | PA6OyE | Composition adhésive 2 | PA11-TL | épaisseurs 225/50/100/350/ 50/225 µm |

| | III | III | I | II | | | |
|---|---|---|---|---|---|---|---|
| 27 | PA11Cu | PA11Choc | Composition adhésive 2 | PA6Oy | épaisseurs 375/50/50/425 µm | | |

| | III | I | II | II | | | |
|---|---|---|---|---|---|---|---|
| 28 | PA11Cu | Composition adhesive 2 | PA6Oy | PA6a | épaisseurs 425/50/375/50 µm | | |

| | III | I | II | | | | |
|---|---|---|---|---|---|---|---|
| 29 | PA11Choc | Composition adhésive 2 | PA6Oy | épaisseurs 425/50/425 µm | | | |
| 30 | PA11Choc | Composition adhésive 2 | PA6PyE | | | | |

| | III | I | | | | | |
|---|---|---|---|---|---|---|---|
| 31 | PA11Cu | Composition adhésive 8 | épaisseur 500/500 µm | | | | |

| | III | I | III | | | | |
|---|---|---|---|---|---|---|---|
| 32 | PA11Cu | Composition adhésive 8 | PA11-TL | ép. 250/500/250pm | | | |

| | III | I | II | I | III | | |
|---|---|---|---|---|---|---|---|
| 33 | PA11Cu | Composition adhésive 2 | EVOH | Composition adhésive 2 | PA11-TL | ép.400/50/100/50/400 | |
| 34 | PA12-Cu | Composition adhésive 2 | EVOH | Composition adhésive 2 | PA11-TL | | |
| 35 | PA11Choc | Composition adhésive 2 | EVOH | Composition adhésive 2 | PA11Choc-TL | | |
| 36 | PA11Cu | Composition adhésive 2 | EVOHim | Composition adhésive 2 | PA11-TL | | |
| 37 | PA11Cu | Composition adhésive 2 | EVOHim | Composition adhésive 2 | PA11-CondTL | | |

| | III | I | II | I | III | III | |
|---|---|---|---|---|---|---|---|
| 38 | PA11Cu | Composition adhésive 2 | EVOH | Composition adhésive 2 | pA11Choc | PA11-CondTL | ép.400/50/100/ 50/325/75 |

| | III | I | II | I | III | | |
|---|---|---|---|---|---|---|---|
| 39 | PA11Cu | Composition adhésive 2 | PVDFf | Composition adhésive 2 | PA11-TL | ép.400/50/100/50/400 | |

| | III | I | II | I | II | | |
|---|---|---|---|---|---|---|---|
| 40 | PA11Cu | Composition adhésive 2 | PVDFf | Composition adhésive 2 | PA6OyE | ép.400/50/100/50/400 | |

| | III | I | II | | | | |
|---|---|---|---|---|---|---|---|
| 41 | PA11Cu | Composition adhésive 2 | PVDFf | ép.750/50/200 | | | |
| 42 | PA11Cu | Composition adhésive 2 | ETFE | | | | |
| 43 | PA11Cu | Composition adhésive 2 | EFEP-C | ép.750/50/50/100 pb 4 couches | | | |

| | I | II | | | | | |
|---|---|---|---|---|---|---|---|
| 44 | Composition adhésive 8 | PA6Oy | | épaisseurs 500/500 µm | | | |
| 45 | Composition adhésive 5 | PPAa | | épaisseurs 500/500 µm | | | |

| | I | II | I | | | | |
|---|---|---|---|---|---|---|---|
| 46 | Composition adhésive 2 | PA6Oy | Composition adhésive 2 | épaisseurs 250/500/250 µm | | | |
| 47 | Composition adhésive 4 | PA6Oy | Composition adhésive 4 | | | | |
| 48 | Composition adhésive 2 | EVOH | Composition adhésive 2 | | | | |

| | I | II | | | | | |
|---|---|---|---|---|---|---|---|
| 49 | Composition adhésive 2 | PVDFf | | épaisseurs 900/100 µm | | | |

| | I | II | I | | | | |
|---|---|---|---|---|---|---|---|
| 50 | Composition adhésive 2 | PPAa | Composition adhésive 2 | épaisseurs 250/500/250 µm | | | |

| | III | I | II | IV | | | |
|---|---|---|---|---|---|---|---|
| 51 | PA12-TL | Composition Adhésive 13 | | | | | épaisseurs 500 / 500 µm |
| 52 | PA12-TL | Composition Adhésive 13 | PA6a | | | | épaisseurs 500 / 100 / 400 µm |
| 53 | PA12-TL | Composition Adhésive 13 | PPAb | | | | épaisseurs 650 / 100 / 250 µm |
| 54 | PA12-TL | Composition Adhésive 13 | MXD6hi | | | | Idem |
| 55 | PA12-TL | Composition Adhésive 13 | EVOH | PA6OyE | | | épaisseurs 350 / 100 / 100 / 450 µm |
| 56 | PA12-TL | Composition Adhésive 13 | EVOH | Comp Adh13 | | | épaisseurs 350 / 100 / 100 / 450 µm |
| 57 | PA12-TL | Composition Adhésive 13 | EVOH | PA6a | | | épaisseurs 350 / 100 / 100 / 450 µm |

| | III | I | II | I | III | | |
|---|---|---|---|---|---|---|---|
| 58 | PA12-TL | Composition Adhésive 13 | EVOH | Comp. Adh.13 | PA12-TL | | épaisseurs 250/200/100/200/250 µm |
| 59 | PA12-TL | Composition Adhésive 12 | EVOH | Comp. Adh.12 | PA12-TL | | épaisseurs 250R00/1 00/200/250 µm |
| 60 | PA11Cu | Composition Adhésive 12 | EVOH | Comp. Adh. 12 | PA11-TL | | épaisseurs 250/200/100r200/250 µm |
| 61 | PA11-TL | Composition Adhésive 12 | EVOH100 | Comp. Adh. 12 | PA11-TL | | épaisseurs 150/300/100/300/150 µm |
| 62 | PA12-TL | Composition Adhésive 13 | PPA | Comp. Adh.13 | PA12-TL | | épaisseurs 250/1501200/150/250 µm |

| | III | I | II | I | II / IV | | |
|---|---|---|---|---|---|---|---|
| 63 | PA12-TL | Composition Adhésive 13 | EVOH | Composition Adhésive 13 | PPAb | | épaisseurs 250/200/100/300/150 µm |

| | III | I / II | II | I / II | III | | |
|---|---|---|---|---|---|---|---|
| 64 | PA12-TL | Composition Adhésive 17 | EVOH | Composition Adhésive 17 | PA12-TL | | épaisseurs 350/100/100/100/350 µm |
| 65 | PA12-TL | Composition Adhésive 18 | EVOH | Composition Adhésive 18 | PA12-TL | | épaisseurs 350/100/100/100/350 µm |

| | | III I / II | | | | | |
|---|---|---|---|---|---|---|---|
| 66 | PA12-TL | Composition Adhésive 16 | | | | | épaisseurs 650 / 350 µm |

| | III | I | IV | III | | | |
|---|---|---|---|---|---|---|---|
| 67 | PA12-TL | Composition Adhésive 13 | PA6a | PPAb | | | épaisseurs 250/100/400/250 µm |

| | III | I | III | IV | | | |
|---|---|---|---|---|---|---|---|
| 68 | PA12-TL | Composition Adhésive 13 | PPAb | PA6a | | | épaisseurs 250 / 100 / 250 / 400 µm |

| | III | I /II | m | | | | |
|---|---|---|---|---|---|---|---|
| 69 | PA12-TL | Composition Adhésive 13 | PA12-TL | | | | épaisseurs 250 / 500 / 250 µm |
| 70 | PA11Choo-TL | Composition Adhésive 13 | PA11Choc-TL | | | | épaisseurs 250 / 500 / 250 µm |
| 71 | PA11Choc-TL | Composition Adhésive 14 | PA11Choc-TL | | | | épaisseurs 250 / 500 / 250 um |

| | III | I | II | I | III | | |
|---|---|---|---|---|---|---|---|
| 72 | PA11pl | Composition Adhésive 13 | EVOH | Composition Adhésive 13 | PA11-C | | épaisseurs 250/200/10o/200/250 µm |

| | III / I | II | IV | | | | |
|---|---|---|---|---|---|---|---|
| 73 | Composition Adhésive 11 | PA6a | | | | | épaisseurs 500/500 µm |
| 74 | Composition Adhésive 11 | PPAb | | | | | épaisseurs 750 / 250 µm |
| 75 | Composition Adhésive 11 | EVOH | PA6OyE | | | | épaisseurs 450 / 100 / 450 µm |

| | III / I | II | III / I | | | | |
|---|---|---|---|---|---|---|---|
| 76 | Composition Adhésive 11 | EVOH | Composition Adhésive 11 | | | | Idem |

| | III / I | II | IV / I | | | | |
|---|---|---|---|---|---|---|---|
| 77 | Composition Adhésive 11 | EVOH | Composition Adhésive 13 | | | | Idem |
| 78 | Composition Adhésive 11 | PPA | Composition Adhésive 13 | | | | épaisseurs 400 / 200 / 400 µm |

| | III / I | II | II / IV | III | | | |
|---|---|---|---|---|---|---|---|
| 79 | Composition Adhésive 11 | EVOH | MXD6hi | Composition Adhésive 11 | | | épaisseurs 400 / 100/100 /400 µm |

| | III / I | II | III / I | | | | |
|---|---|---|---|---|---|---|---|
| 80 | Composition Adhésive 11 | PA6pl | Composition Adhésive 11 | | | | épaisseurs 250 / 500 / 250 µm |

| | III / I | IV | II | IV | III / I | | |
|---|---|---|---|---|---|---|---|
| 81 | Composition Adhésive 11 | PA6pl | EVOH | PA6pl | Composition Adhésives11 | | épaisseurs 250/200/100/200/250 µm |
| « dry-blend » | | | | | | | |

| III + I | | | | II | | | |
|---|---|---|---|---|---|---|---|
| 82 | Composition 19 = PA12-TL + 20% compo. Adh.1 | | | PPAb | | | épaisseurs 750 / 250 µm |
| 83 | Composition 20 =PA12-TL+20% compo.Adh.13 | | | PPAb | | | Idem |

| | III | I | | II | 1 | III | |
|---|---|---|---|---|---|---|---|
| 84 | PA12-TL | Composition21=PA6a + 20% compo.Adh. 1 | | EVOH | Composition 21 | PA12-TL | épaisseurs 250/200/100/200/250 µm |

| | III | I+II | | | | | |
|---|---|---|---|---|---|---|---|
| 85 | PA12-TL | Composition 22=PPAa +20%compo. Adh. 1 | | | | | |
| 86 | PA12-TL | Composition 23 = PPAa + 20%compo.Adh. 11 | | | | | |

### ANNEXE 2

Evaluation des structures selon l'invention :

| | 1 | 2 | 3 | 4 | 5 | 6 | 7 | 8 | 9 | 10 | 11 | 12 |
|---|---|---|---|---|---|---|---|---|---|---|---|---|
| 1 | TB,>80 | B, >30 | B+ | 0 | 0 | 38 | AB>250 | AB | 190 | TM | B+ | nc |
| 2 | TB,>80 | B, >30 | B | 0 | 37 | 73 | Tub>1000 | B+ | 35 | M | B | nc |
| 3 | TB,>80 | B, >30 | B | 0 | nc | nc | B>500 | B++ | <30 | M | B | nc |
| 4 | nc | nc | B | 0 | nc | nc | B>500 | nc | nc | M | B | nc |
| 5 | TB,>80 | B, >30 | B+ | 0 | 0 | 27 | B> 1000 | B | 55 | M | B+ | nc |
| 6 | TB,>80 | B, >30 | B+ | 0 | 0 | 30 | AB>250 | B | 55 | M | B+ | nc |
| 7 | TB,>80 | B, >30 | B | 0 | 33 | 60 | AB>250 | B | 60 | M | B+ | nc |
| 8 | B,>60 | AB,>25 | B | 0 | 0 | 60 | TB> 100 | B | 57 | M | B+ | nc |
| 9 | TB,>80 | B, >30 | B+ | 0 | 0 | 33 | TB> 1000 | B | 57 | M | B+ | nc |
| 10 | B,>60 | B, >30 | B | 0 | 0 | 60 | TB> 1000 | B | 52 | M | B+ | nc |
| 11 | B,>60 | B, >30 | B | 0 | 0 | 50 | TB> 1000 | B | 54 | M | B+ | nc |
| 12 | B,>60 | B, >30 | B | 0 | nc | nc | AB>250 | B++ | <30 | AB | AB | nc |
| 13 | B,>60 | B, >30 | B | 0 | nc | nc | AB>250 | B++ | <30 | AB | AB | nc |
| 14 | B,>60 | B, >30 | B | 0 | nc | nc | AB>250 | B++ | <30 | AB | AB | nc |
| 15 | B,>60 | B, >30 | B | 0 | nc | nc | AB>250 | B++ | <30 | M | AB | nc |
| 16 | B,>60 | B, >30 | B | 0 | nc | nc | AB>250 | B++ | <30 | M | AB | nc |
| 17 | B,>60 | AB,>25 | B | 0 | nc | nc | AB>250 | B++ | <30 | M | AB | nc |
| 18 | TB,>80 | B, >30 | TB | 0 | 0 | 3 | AB>250 | TB | <10 | M | B | nc |
| 19 | B,>60 | AB,>25 | TB | 0 | 0 | nc | nc | nc | nc | Nc | nc | nc |
| 20 | TB,>80 | B, >30 | TB | 0 | 0 | 0 | AB>250 | TB | <10 | M | B+ | nc |
| 21 | TB,>80 | B, >30 | B | 0 | nc | nc | B>500 | B+ | 45 | AB | B | nc |
| 22 | TB,>80 | B, >30 | TB | 0 | 0 | 0 | TB>1000 | B+ | 41 | TB | B | nc |
| 23 | TB,>80 | B, >30 | TB | 0 | 0 | 0 | TB>1000 | TB | <30 | TB | AB | nc |
| 24 | TB,>80 | B, >30 | TB | 0 | 0 | 0 | TB>1000 | TB | <30 | TB | AB | nc |
| 25 | TB,>80 | B, >30 | B | 0 | nc | nc | B>500 | B++ | <30 | TB | AB | nc |
| 26 | TB,>80 | B, >30 | B | 0 | nc | nc | AB>250 | TB | <10 | TB | B+ | nc |
| 27 | TB,>80 | B, >30 | TB | 0 | 5 | 50 | TB>1000 | B+ | 35 | M | B | nc |
| 28 | TB,>80 | B, >30 | B+ | 0 | 0 | 50 | B>500 | B+ | 37 | TM | B | nc |
| 29 | TB, >80 | B,>30 | B+ | 0 | 30 | 70 | TB>1000 | B+ | 41 | M | B | nc |
| 30 | TB, >80 | B, >30 | TB | 0 | 0 | 0 | TB>1000 | B | 59 | M | B+ | nc |
| 31 | B, >60 | B,>30 | B | 0 | nc | nc | TB>1000 | AB | 110 | AB | nc | nc |
| 32 | B, >60 | B, >30 | B | 0 | nc | nc | TB>1000 | AB | 116 | TB | nc | nc |
| 33 | TB, 80 | B, >30 | B+ | 0 | 0 | 3 | AB>250 | TB | <10 | TB | B | nc |
| 34 | TB, >80 | B, >30 | B | 0 | 0 | 90 | AB>250 | TB | <10 | TB | B | nc |
| 35 | TB, >80 | B, >30 | TB | 0 | 0 | 0 | B>500 | TB | <10 | TB | B | nc |
| 36 | TB, 80 | B, >30 | TB | 0 | 0 | 0 | AB>250 | TB | <10 | TB | B+ | non |
| 37 | TB, 80 | B,>30 | B | 0 | nc | nc | AB>250 | TB | <10 | Nc | nc | oui |
| 38 | TB, >80 | B,>30 | B+ | 0 | 0 | nc | AB>250 | TB | <10 | Nc | nc | oui |
| 39 | AB, >30 | AB, >25 | B | 0 | nc | nc | AB>250 | B++ | <20 | Nc | nc | nc |
| 40 | AB, >30 | AB, >25 | B | 0 | nc | nc | AB>250 | B++ | <20 | Nc | nc | nc |
| 41 | AB, >30 | AB, >25 | B | 0 | nc | nc | nc | B++ | <20 | TB | nc | nc |
| 42 | AB, >30 | AB, >25 | B | 0 | nc | nc | nc | B++ | <20 | TB | nc | nc |
| 43 | AB, >30 | AB, >25 | B | 0 | nc | nc | nc | B++ | <20 | TB | nc | nc |
| 44 | B, >60 | B, >30 | nc | nc | nc | nc | nc | B+ | 31 | M | nc | nc |
| 45 | B, >60 | B, >30 | nc | nc | nc | nc | nc | B++ | <30 | AB | nc | nc |
| 46 | TB, >80 | B, >30 | nc | nc | nc | nc | nc | B+ | 31 | AB | nc | nc |
| 47 | B, >60 | B, >30 | nc | nc | nc | nc | nc | B+ | 39 | AB | nc | nc |
| 48 | TB,>80 | B, 30 | nc | nc | nc | nc | nc | TB | <10 | AB | nc | nc |
| 49 | AB, >30 | B, >30 | nc | nc | nc | nc | nc | B++ | <20 | TB | Nc | nc |
| 50 | B,>60 | B, >30 | nc | nc | nc | nc | nc | B++ | <30 | AB | Nc | nc |
| 51 | B,>60 | B, >30 | B | 0 | Nc | nc | Nc | Nc | nc | TM | TB | Nc |
| 52 | B,>60 | B, >30 | B | 0 | Nc | nc | Nc | AB | 190 | TM | B+ | nc |
| 53 | B,>60 | B, >30 | B | 0 | Nc | nc | AB>250 | B++ | <30 | AB | AB | Nc |
| 54 | B,>60 | B, >30 | B | 0 | Nc | nc | Nc | TB | <20 | Nc | AB | Nc |
| 55 | B,>60 | B, >30 | B | 0 | Nc | nc | Nc | TB | <10 | TM | B | Nc |
| 56 | B,>60 | B, >30 | B | 0 | Nc | nc | Nc | TB | <10 | TM | B+ | Nc |
| 57 | B,>60 | B, >30 | B | 0 | Nc | nc | Nc | TB | <10 | TM | B | Nc |
| 58 | B,>60 | B, >30 | B+ | 0 | 0 | nc | Nc | TB | <10 | TB | B+ | Nc |
| 59 | B,>60 | B, >30 | B+ | 0 | 0 | nc | Nc | TB | <10 | TB | B+ | Nc |
| 60 | B,>60 | B, >30 | B+ | 0 | 0 | nc | AB>250 | TB | <10 | TB | B+ | Nc |
| 61 | B,>60 | B, >30 | B+ | 0 | Nc | nc | Nc | TB+ | <3 | TB | B+ | Nc |
| 62 | B,>60 | B, >30 | B+ | 0 | 0 | nc | Nc | B++ | <30 | TB | B | Nc |
| 63 | B,>60 | B, >30 | B | 0 | nc | nc | Nc | TB+ | <3 | AB | AB | Nc |
| 64 | AB,>30 | B, >30 | B+ | 0 | 0 | nc | Nc | TB+ | <3 | TN | AB | Nc |
| 65 | AB,>30 | B, >30 | B+ | 0 | 0 | nc | Nc | TB+ | <3 | TB | AB | Nc |
| 66 | AB,>30 | B, >30 | B | 0 | Nc | nc | AB>250 | B++ | <30 | AB | AB | Nc |
| 67 | B,>60 | B, >30 | B | 0 | nc | nc | Nc | B++ | <30 | AB | AB | Nc |
| 68 | B,>60 | B, >30 | B | 0 | nc | nc | Nc | B++ | <30 | TM | AB | Nc |
| 69 | B,>60 | B, >30 | TB | 0 | 0 | nc | Nc | AB | 215 | TB | TB | Nc |
| 70 | B,>60 | B, >30 | TB | 0 | 0 | 0 | Nc | AB | Nc | TB | B+ | Nc |
| 71 | B,>60 | B, >30 | TB | 0 | 0 | 0 | TB >1000 | AB | Nc | TB | B+ | Nc |
| 72 | B,>60 | B, >30 | B | 0 | nc | nc | nc | TB | <10 | TB | B | Nc |
| 73 | B,>60 | B, >30 | B | 0 | nc | nc | nc | AB | 185 | TM | B+ | Nc |
| 74 | B,>60 | B, >30 | B | 0 | nc | nc | nc | B++ | <30 | AB | AB | Nc |
| 75 | B,>60 | B, >30 | B | 0 | nc | nc | nc | TB | <10 | TM | B | Nc |
| 76 | B,>60 | B, >30 | B+ | 0 | 0 | nc | nc | TB | <10 | TB | B+ | Nc |
| 77 | B,>60 | B, >30 | B | 0 | nc | nc | nc | TB | <10 | TM | B+ | Nc |
| 78 | B,>60 | B, >30 | B | 0 | nc | nc | nc | B++ | <30 | TM | AB | Nc |
| 79 | B,>60 | B, >30 | B | 0 | nc | nc | nc | TB+ | <3 | TB | AB | Nc |
| 80 | B,>60 | B, >30 | TB | 0 | 0 | nc | nc | AB | 160 | TB | B+ | Nc |
| 81 | B,>60 | B, >30 | B | 0 | nc | nc | nc | TB | <10 | TB | B | Nc |
| 82 | B,>60 | B, >30 | B | 0 | nc | nc | nc | B++ | <30 | AB | AB | Nc |
| 83 | B,>60 | B, >30 | B | 0 | nc | nc | nc | B++ | <30 | AB | AB | Nc |
| 84 | B,>60 | B, >30 | B | 0 | nc | nc | nc | TB | <10 | TB | B | Nc |
| 85 | B,>60 | B, >30 | B | 0 | nc | nc | Nc | B+ | <50 | AB | B | Nc |
| 86 | B,>60 | B, >30 | B | 0 | nc | nc | Nc | B++ | <30 | AB | B | Nc |

### ANNEXE 3

Evaluation des structures des contre-exemples :

| | 1 | 2 | 3 | 4 | 5 | 6 | 7 | 8 | 9 | 10 | 11 |
|---|---|---|---|---|---|---|---|---|---|---|---|
| 1 | TB,>80 | TM, 3 | nc | nc | nc | nc | nc | nc | nc | nc | Nc |
| 2 | B, >60 | TM, 3 | nc | nc | nc | nc | nc | nc | nc | nc | Nc |
| 3 | M, 27 | M, 13 | nc | nc | nc | nc | nc | nc | nc | nc | Nc |
| 4 | M, 28 | M, 16 | nc | nc | nc | nc | nc | nc | nc | nc | Nc |
| 5 | AB, 32 | M, 19 | nc | nc | nc | nc | nc | nc | nc | nc | Nc |
| 6 | M, 23 | M, 20 | nc | nc | nc | nc | nc | nc | nc | nc | Nc |
| 7 | M, 20 | M, 12 | nc | nc | nc | nc | nc | nc | nc | nc | Nc |
| 8 | M, 27 | M, 15 | nc | nc | nc | nc | nc | nc | nc | nc | Nc |
| 9 | AB, 33 | M, 16 | nc | nc | nc | nc | nc | nc | nc | nc | Nc |
| 10 | M, 12 | nc | nc | nc | nc | nc | nc | nc | nc | nc | Nc |
| 11 | TM, <5 | nc | nc | nc | nc | nc | nc | nc | nc | nc | Nc |
| 12 | M, 20 | M, 13 | nc | nc | nc | nc | nc | nc | nc | nc | Nc |
| 13 | AB, 55 | TM, 0 | nc | nc | nc | nc | nc | nc | nc | nc | Nc |
| 14 | TM, <5 | nc | nc | nc | nc | nc | nc | nc | nc | nc | Nc |
| 15 | M, 30 | nc | nc | nc | nc | nc | nc | M | 220 | nc | Nc |
| 16 | nc | nc | Nc | nc | nc | nc | nc | M | 235 | nc | Nc |
| 17 | nc | nc | Nc | nc | nc | nc | TM <50 | nc | nc | TM | Nc |
| 18 | nc | nc | Nc | nc | nc | nc | TM <50 | nc | nc | nc | Nc |
| 19 | nc | nc | TM | 100 | 100 | 100 | nc | nc | nc | nc | Nc |
| 20 | nc | nc | M | 80 | 100 | 100 | nc | nc | nc | nc | Nc |
| 21 | TM, <5 | nc | Nc | nc | nc | nc | nc | nc | nc | nc | Nc |
| 22 | TM, <5 | nc | Nc | nc | nc | nc | nc | nc | nc | nc | Nc |
| 23 | - | - | B+ | 0 | 7 | 53 | M <250 | M | 350 | TB | TB |
| 24 | M>10,<20 | TM,<5 | B+ | 0 | 100 | 100 | nc | nc | nc | AB | AB |
| 25 | M>10,<20 | TM,<5 | B+ | 0 | 100 | 100 | nc | nc | nc | AB | AB |

### ANNEXE 4

| exmples annexe 2 n° | 33 | 18 | 2 |
|---|---|---|---|
| | 5 couches | 4 couches | 3 couches |
| Extrudeuse 1, interne | PA11-TL | PA60YE | PA60Y |
| Z1,°C | 180 | 200 | 200 |
| Z2,°C | 200 | 220 | 220 |
| Z3,°C | 220 | 240 | 240 |
| Z4,°C | 230 | 240 | 240 |
| Z5, °C | 240 | 240 | 240 |
| Z6, °C | 240 | 240 | 240 |
| Z7, °C | 240 | 240 | 240 |
| Rotation vis, rpm | 28,3 | 35 | 28,3 |
| Couple, % | 38 | 24 | 28 |
| Pression, bar | 299 | 142 | 194 |

| Extrudeuse 2 | Composition adhésive 2 | EVOH | PA60Y |
|---|---|---|---|
| Z1,°C | 170 | 200 | 200 |
| Z2,°C | 190 | 220 | 220 |
| Z3,°C | 210 | 240 | 240 |
| Z4, °C | 240 | 240 | 240 |
| Z5, °C | 240 | 240 | 240 |
| Rotation vis, rpm | 17 | 32,5 | 30,3 |
| Couple, % | 33 | 28 | 18 |
| Pression, bar | 73 | 83 | 81 |

| Extrudeuse 3 | EVOH | PA11Cu | PA11Cu |
|---|---|---|---|
| Z1, °C | 170 | 190 | 200 |
| Z2, °C | 190 | 210 | 220 |
| Z3, °C | 210 | 230 | 240 |
| Z4, °C | 230 | 240 | 250 |
| Z5, °C | 240 | 240 | 250 |
| Z6, °C | 240 | 240 | 250 |
| Z7, °C | 240 | 240 | 250 |
| Rotation vis, rpm | 9,6 | 28,6 | 32,3 |
| Couple, % | 40 | 40 | 32 |
| Pression, bar | 97 | 281 | 100 |

| Extrudeuse 4 | Composition adhésive 2 | Composition adhésive 2 | Composition adhésive 2 |
|---|---|---|---|
| Z1,°C | 190 | 190 | 200 |
| Z2, °C | 220 | 210 | 220 |
| Z3, °C | 230 | 230 | 240 |
| Z4, °C | 240 | 260 | 250 |
| Z5, °C | 240 | 260 | 270 |
| Rotation vis, rpm | 27 | 12,4 | 12,1 |
| Couple, % | 7 | 28 | 15 |
| Pression, bar | 22 | 85 | 84 |

| Extrudeuse 5, externe | PA11Cu | PA11Cu | PA11Cu |
|---|---|---|---|
| Z1, °C | 170 | 190 | 200 |
| Z2, °C | 200 | 210 | 220 |
| Z3, °C | 220 | 220 | 240 |
| Z4, °C | 240 | 230 | 250 |
| Z5, °C | 240 | 240 | 250 |
| Z6, °C | 240 | 240 | 250 |
| Z7, °C | 240 | 240 | 250 |
| Rotation vis, rpm | 37.3 | 38,3 | 32,8 |
| Couple. % | 30 | 38 | 28 |
| Pression, bar | 74 | 287 | 98 |
| Tête de coextrusion | | | |
| Temp.. °C | 240 | 260 | 260 |
| Outillage | | | |
| Z1, °C | 240 | 260 | 260 |
| Z2, °C | 240 | 260 | 260 |
| Z3, °C | 230 | 260 | 260 |
| Calibration | | | |
| diamètre calibre, mm | 9 | 8,85 | 9,5 |
| débit suintement, l/h | 36 | 36 | 44 |
| distance calibre-filière, mm | 60 | 35 | 30 |
| dépression, mbar | 100 | 80 | 50 |
| Ligne | | | |
| Vitesse de ligne, m/min | 20 | 20 | 20 |

## Revendications

1. Composition adhésive comprenant :
- au moins un polyamide noté A présentant un nombre moyen d'atomes de carbone par atome d'azote noté C_{A} compris entre 4 et 8,5, avantageusement entre 4 et 7 ;
- au moins un polyamide noté B présentant une température de fusion supérieure ou égale à 180°C et un nombre moyen d'atomes de carbone par atome d'azote noté C_{B} compris entre 7 et 10, avantageusement entre 7,5 et 9,5 ;
- au moins un polyamide noté C présentant un nombre moyen d'atomes de carbone par atome d'azote noté C_{C} compris entre 9 et 18, avantageusement entre 10 et 18 ;
au moins 50% en poids de ladite composition étant formés d'un ou de plusieurs polyamides choisis parmi les polyamides A, B et C,
la moyenne pondérée massique des enthalpies de fusion de ces polyamides au sein de ladite composition étant supérieure à 25J/g (DSC), les enthalpies de fusion de ces polyamides étant mesurées conformément à la norme ISO 11 357
le nombre moyen d'atomes de carbone par atome d'azote des polyamides A, B et C répondant en outre à l'inéquation stricte suivante : C_{A} < C_{B} < C_{C}.

2. Composition selon la revendication 1, **caractérisée en ce que** la différence entre les nombres moyens d'atomes de carbone par atome d'azote (C_{B}-C_{A}) et/ou (C_{C}-C_{B}) est comprise entre 1 et 4, et de préférence entre 2 et 3.

3. Composition selon la revendication 1 ou 2, **caractérisée en ce que** chacun des polyamides A, B et C a une enthalpie de fusion supérieure à 25J/g (DSC).

4. Composition selon l'une quelconque des revendications 1 à 3, **caractérisée en ce qu'**elle comprend de 34 à 84% en poids de polyamide B par rapport au poids total des polyamides présents au sein de ladite composition, de préférence entre 50 et 76%.

5. Composition selon l'une quelconque des revendications 1 à 4, **caractérisée en ce que** la température de fusion du polyamide A est supérieure ou égale à 210°C et la température de fusion du polyamide C est inférieure à 200°C.

6. Composition selon l'une quelconque des revendications 1 à 5, **caractérisée en ce que** le polyamide A est choisi parmi le PA6, le PA4.6 et le PA6.6, le polyamide B est choisi parmi le PA6.10 et le PA6.12, de préférence le PA6.10 et le polyamide C est choisi parmi le PA10.10, le PA11, le PA12, le PA10.12 et le PA6.18.

7. Utilisation de la composition adhésive définie à l'une quelconque des revendications 1 à 6 pour la réalisation de structures destinées au transfert ou au stockage d'un fluide.

8. Utilisation selon la revendication 7, **caractérisée en ce que** le fluide est choisi parmi une huile, un liquide de frein, un liquide de refroidissement, une solution d'urée, un hydrocarbure, un diesel, une essence, une essence alcoolisée et un bio-carburant.

9. Structure comprenant au moins deux couches, l'une des deux couches, dite couche adhésive (I), étant formée d'une composition adhésive telle que définie à l'une quelconque des revendications 1 à 6.

10. Structure selon la revendication 9, **caractérisée en ce que** la seconde couche, dite couche barrière (II), est constituée d'une composition comprenant des polymères barrières aux bio-carburants, de préférence choisis parmi l'EVOH, le polyamide A et leur mélange.

11. Structure selon la revendication 9 ou 10, **caractérisée en ce que** la structure comprend au moins une troisième couche, dite couche endurante (III), formée d'une composition comprenant du polyamide C, le polyamide C étant de préférence choisi parmi le PA11, le PA12, le PA10.10, le PA10.12, le PA12/10.T et leurs mélanges, la couche adhésive (I) étant disposée entre ladite couche endurante (III) et la couche barrière (II) et adhérant à leur zone de contact respective.

12. Structure selon l'une quelconque des revendications 9 à 11, **caractérisée en ce qu'**elle comprend, dans l'ordre :
. une troisième couche, dite couche endurante (III) formée d'une composition comprenant du polyamide C,
. la couche adhésive (I),
. une seconde couche, dite couche barrière (II), formée d'une composition comprenant de l'EVOH, et
. une quatrième couche (IV) formée d'une composition comprenant du polyamide A,
les couches adhérant entre elles par leur zone de contact respective.

13. Structure selon l'une quelconque des revendications 9 à 11, **caractérisée en ce qu'**elle comprend les cinq couches successives suivantes :
- une couche endurante (III) formée d'une composition comprenant du polyamide C,
- la couche adhésive (I),
- une couche barrière (II) formée d'une composition comprenant de l'EVOH,
- une autre couche adhésive (I), et
- une couche endurante (III) formée d'une composition comprenant du polyamide C,
les couches adhérant entre elles par leur zone de contact respective.

14. Structure selon l'une quelconque des revendications 9 à 13, **caractérisée en ce qu'**elle se présente sous la forme d'un tube, d'un récipient, d'un film ou d'une plaque.

15. Utilisation d'une structure telle que définie à l'une quelconque des revendications 9 à 14, , pour le transport et le stockage de fluides,

16. Utilisation selon la revendication 15, **caractérisée en ce que** le fluide est choisi parmi une huile, un liquide de frein, une solution d'urée, un liquide de refroidissement à base de glycol, des carburants, et particulièrement des bio-essences.

## Claims

1. Adhesive composition comprising:
- at least one polyamide noted A, with a mean number of carbon atoms per nitrogen atom, noted C_{A}, of between 4 and 8.5 and advantageously between 4 and 7;
- at least one polyamide noted B, with a melting point of greater than or equal to 180°C and a mean number of carbon atoms per nitrogen atom, noted C_{B}, of between 7 and 10 and advantageously between 7.5 and 9.5;
- at least one polyamide noted C, with a mean number of carbon atoms per nitrogen atom, noted C_{C}, of between 9 and 18 and advantageously between 10 and 18;
at least 50% by weight of the said composition being formed from one or more polyamides chosen from polyamides A, B and C,
the mass-weighted mean of the heats of fusion of these polyamides in the said composition being greater than 25 J/g (DSC), the heats of fusion of these polyamides being measured in accordance with the standard ISO 11357,
the mean number of carbon atoms per nitrogen atom of the polyamides A, B and C also satisfying the following strict inequality: C_{A} < C_{B} < C_{C}.

2. Composition according to Claim 1, **characterized in that** the difference between the mean numbers of carbon atoms per nitrogen atom (C_{B}-C_{A}) and/or (C_{C}-C_{B}) is between 1 and 4 and preferably between 2 and 3.

3. Composition according to Claim 1 or 2, **characterized in that** each of the polyamides A, B and C has a heat of fusion of greater than 25 J/g (DSC).

4. Composition according to any one of Claims 1 to 3, **characterized in that** it comprises from 34% to 84% and preferably between 50% and 76% by weight of polyamide B relative to the total weight of polyamides present in the said composition.

5. Composition according to any one of Claims 1 to 4, **characterized in that** the melting point of polyamide A greater than or equal to 210°C and the melting point of polyamide C is less than 200.

6. Composition according to any one of Claims 1 to 5, **characterized in that** polyamide A is chosen from PA6, PA4.6 and PA6.6, polyamide B is chosen from PA6.10 and PA6.12, preferably PA6.10, and polyamide C is chosen from PA10.10, PA11, PA12, PA10.12 and PA6.18.

7. Use of the adhesive composition defined in any one of Claims 1 to 6, for the preparation of structures intended for transferring or storing a fluid.

8. Use according to Claim 7, **characterized in that** the fluid is chosen from an oil, a brake fluid, a coolant liquid, a urea solution, a hydrocarbon, a diesel, a petroleum spirit, an alcohol-containing petroleum spirit and a biofuel.

9. Structure comprising at least two layers, one of the two layers, referred to as the adhesive layer (I), being formed from an adhesive composition as defined in any one of Claims 1 to 6.

10. Structure according to Claim 9, **characterized in that** the second layer, referred to as the barrier layer (II), is constituted of a composition comprising polymers that are barriers to biofuels, preferably chosen from EVOH and polyamide A, and a mixture thereof.

11. Structure according to Claim 9 or 10, **characterized in that** the structure comprises at least a third layer, referred to as the tough layer (III), formed from a composition comprising polyamide C, polyamide C preferably being chosen from PA11, PA12, PA10.10, PA10.12 and PA12/10.T, and mixtures thereof, the adhesive layer (I) being arranged between the said tough layer (III) and the barrier layer (II) and adhering to their respective contact zone.

12. Structure according to any one of Claims 9 to 11, **characterized in that** it comprises, in the following order:
. a third layer, referred to as the tough layer (III), formed from a composition comprising polyamide C,
. the adhesive layer (I),
. a second layer, referred to as the barrier layer (II), formed from a composition comprising EVOH, and
. a fourth layer (IV) formed from a composition comprising polyamide A,
the layers adhering to each other via their respective contact zone.

13. Structure according to any one of Claims 9 to 11, **characterized in that** it comprises the following five successive layers:
- a tough layer (III) formed from a composition comprising polyamide C,
- the adhesive layer (I),
- a barrier layer (II) formed from a composition comprising EVOH,
- another adhesive layer (I), and
- a tough layer (III) formed from a composition comprising polyamide C,
the layers adhering to each other via their respective contact zone.

14. Structure according to any one of Claims 9 to 13, **characterized in that** it is in the form of a pipe, a container, a film or a plate.

15. Use of a structure as defined in any one of Claims 9 to 14, for transporting and storing fluids.

16. Use according to Claim 15, **characterized in that** the fluid is chosen from an oil, a brake fluid, a urea solution, a glycol-based coolant liquid, and fuels, and in particular biofuels.

## Patentansprüche

1. Klebstoffzusammensetzung, umfassend:
- mindestens ein Polyamid A mit einer durchschnittlichen Zahl von Kohlenstoffatomen pro Stickstoffatom C_{A} zwischen 4 und 8,5, vorteilhafterweise zwischen 4 und 7;
- mindestens ein Polyamid B mit einer Schmelztemperatur größer gleich 180°C und einer durchschnittlichen Zahl von Kohlenstoffatomen pro Stickstoffatom C_{B} zwischen 7 und 10, vorteilhafterweise zwischen 7,5 und 9,5;
- mindestens ein Polyamid C mit einer durchschnittlichen Zahl von Kohlenstoffatomen pro Stickstoffatom C_{C} zwischen 9 und 18, vorteilhafterweise zwischen 10 und 18;
wobei mindestens 50 Gew.-% der Zusammensetzung aus einem oder mehreren Polyamiden, die unter den Polyamiden A, B und C ausgewählt sind, gebildet werden,
wobei das massengewichtete Mittel der Schmelzenthalpien dieser Polyamide in der Zusammensetzung mehr als 25 J/g (DSC) beträgt, wobei die Schmelzenthalpien dieser Polyamide gemäß der ISO-Norm 11 357 gemessen werden,
wobei die durchschnittliche Zahl von Kohlenstoffatomen der Polyamide A, B und C außerdem der folgenden strengen Ungleichung entspricht: C_{A} < C_{B} < C_{C}.

2. Zusammensetzung nach Anspruch 1, **dadurch gekennzeichnet, dass** die Differenz zwischen den durchschnittlichen Zahlen von Kohlenstoffatomen pro Stickstoffatom (C_{B}-C_{A}) und/oder (C_{C}-C_{B}) zwischen 1 und 4 und vorzugsweise zwischen 2 und 3 liegt.

3. Zusammensetzung nach Anspruch 1 oder 2, **dadurch gekennzeichnet, dass** jedes der Polyamide A, B und C eine Schmelzenthalpie von mehr als 25 J/g (DSC) aufweist.

4. Zusammensetzung nach einem der Ansprüche 1 bis 3, **dadurch gekennzeichnet, dass** sie 34 bis 84 Gew.-% und vorzugsweise zwischen 50 und 76 Gew.-% Polyamid B, bezogen auf das Gesamtgewicht der Polyamide in der Zusammensetzung, umfasst.

5. Zusammensetzung nach einem der Ansprüche 1 bis 4, **dadurch gekennzeichnet, dass** die Schmelztemperatur des Polyamids A größer gleich 210°C ist und die Schmelztemperatur des Polyamids C kleiner als 200°C ist.

6. Zusammensetzung nach einem der Ansprüche 1 bis 5, **dadurch gekennzeichnet, dass** das Polyamid A unter PA 6, PA 4,6 und PA 6,6 ausgewählt ist, das Polyamid B unter PA 6,10 und PA 6,12, vorzugsweise PA 6,10, ausgewählt ist und das Polyamid C unter PA 10,10, PA 11, PA 12, PA 10,12 und PA 6,18 ausgewählt ist.

7. Verwendung der Klebstoffzusammensetzung gemäß einem der Ansprüche 1 bis 6 zur Herstellung von Strukturen für den Transfer oder die Lagerung eines Fluids.

8. Verwendung nach Anspruch 7, **dadurch gekennzeichnet, dass** das Fluid unter einem Öl, einer Bremsflüssigkeit, einer Kühlflüssigkeit, einer Harnstofflösung, einem Kohlenwasserstoff, einem Diesel, einem Benzin, einem alkoholhaltigen Benzin und einem Biokraftstoff ausgewählt ist.

9. Struktur mit mindestens zwei Schichten, wobei eine der beiden Schichten, die als Klebstoffschicht (I) bezeichnet wird, aus einer Klebstoffzusammensetzung gemäß einem der Ansprüche 1 bis 6 gebildet ist.

10. Struktur nach Anspruch 9, **dadurch gekennzeichnet, dass** die zweite Schicht, die als Barriereschicht (II) bezeichnet wird, aus einer Zusammensetzung, die Polymere mit Barriereeigenschaften gegenüber Biokraftstoffen umfasst, die vorzugsweise unter EVOH, dem Polyamid A und einer Mischung davon ausgewählt sind, besteht.

11. Struktur nach Anspruch 9 oder 10, **dadurch gekennzeichnet, dass** die Struktur mindestens eine dritte Schicht aufweist, die als Widerstandsschicht (III) bezeichnet wird und aus einer Zusammensetzung, die Polyamid C umfasst, gebildet ist, wobei das Polyamid C vorzugsweise unter PA 11, PA 12, PA 10,10, PA 10,12, PA 12/10,T und Mischungen davon ausgewählt ist, wobei die Klebstoffschicht (I) zwischen der Widerstandsschicht (III) und der Barriereschicht (II) angeordnet ist und an ihrer jeweiligen Kontaktzone haftet.

12. Struktur nach einem der Ansprüche 9 bis 11, **dadurch gekennzeichnet, dass** sie in der angegebenen Reihenfolge:
. eine dritte Schicht, die als Widerstandsschicht (III) bezeichnet wird und aus einer Zusammensetzung, die Polyamid C umfasst, gebildet ist,
. die Klebstoffschicht (I),
. eine zweite Schicht, die als Barriereschicht (II) bezeichnet wird und aus einer Zusammensetzung, die EVOH umfasst, gebildet ist, und
. eine vierte Schicht (IV), die aus einer Zusammensetzung, die Polyamid A umfasst, gebildet ist,
aufweist, wobei die Schichten an ihrer jeweiligen Kontaktzone aneinander haften.

13. Struktur nach einem der Ansprüche 9 bis 11, **dadurch gekennzeichnet, dass** sie die fünf folgenden aufeinanderfolgenden Schichten aufweist:
. eine Widerstandsschicht (III), die aus einer Zusammensetzung, die Polyamid C umfasst, gebildet ist,
. die Klebstoffschicht (I),
. eine Barriereschicht (II), die aus einer Zusammensetzung, die EVOH umfasst, gebildet ist,
. eine weitere Klebstoffschicht (I) und
. eine Widerstandsschicht (III), die aus einer Zusammensetzung, die Polyamid C umfasst, gebildet ist,
wobei die Schichten an ihrer jeweiligen Kontaktzone aneinander haften.

14. Struktur nach einem der Ansprüche 9 bis 13, **dadurch gekennzeichnet, dass** sie in Form eines Rohrs, eines Behälters, einer Folie oder einer Platte vorliegt.

15. Verwendung einer Struktur nach einem der Ansprüche 9 bis 14 zum Transport und zur Lagerung von Fluiden.

16. Verwendung nach Anspruch 15, **dadurch gekennzeichnet, dass** das Fluid unter einem Öl, einer Bremsflüssigkeit, einer Harnstofflösung, einer Kühlflüssigkeit auf Glykolbasis, und Kraftstoffen, insbesondere Biobenzinen, ausgewählt ist.
